(19) Europäisches Patentamt
European Patent Office
Office européen des brevets

(11) EP 3 713 981 B1

(12) **FASCICULE DE BREVET EUROPEEN**

(45) Date de publication et mention de la délivrance du brevet:
**02.06.2021 Bulletin 2021/22**

(21) Numéro de dépôt: **18819198.5**

(22) Date de dépôt: **21.11.2018**

(51) Int Cl.:
***C08G 18/48*** *(2006.01)* ***C08G 18/73*** *(2006.01)*
***C08G 18/78*** *(2006.01)* ***C08G 18/10*** *(2006.01)*
***C08G 18/22*** *(2006.01)* ***C08G 18/28*** *(2006.01)*
***C09J 175/08*** *(2006.01)* ***C08L 75/08*** *(2006.01)*

(86) Numéro de dépôt international:
**PCT/FR2018/052941**

(87) Numéro de publication internationale:
**WO 2019/102143 (31.05.2019 Gazette 2019/22)**

(54) **POLYURETHANE A TERMINAISONS (5-ALKYL-1,3-DIOXOLEN-2-ONE-4-YL) ET SES UTILISATIONS**

POLYURETHAN MIT (5-ALKYL-1,3-DIOXOLEN-2-ON-4-YL)-ENDGRUPPEN UND VERWENDUNGEN DAVON

POLYURETHANE WITH (5-ALKYL -1,3-DIOXOLEN-2-ONE-4-YL) END GROUPS AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2017 FR 1761031**

(43) Date de publication de la demande:
**30.09.2020 Bulletin 2020/40**

(73) Titulaire: **Bostik SA**
**92700 Colombes (FR)**

(72) Inventeurs:
- **MICHAUD, Guillaume**
  **60280 Venette (FR)**
- **SIMON, Frédéric**
  **60280 Venette (FR)**
- **FOUQUAY, Stéphane**
  **60280 Venette (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**WO-A1-2012/007254** **WO-A1-2015/140457**
**US-A- 5 466 811** **US-A1- 2007 151 666**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 713 981 B1

Printed by Jouve, 75001 PARIS (FR)

## Description

DOMAINE DE L'INVENTION

La présente invention concerne un polyuréthane à terminaisons (5-alkyl-1,3-dioxolen-2-one-4-yl), et son procédé de préparation.

La présente invention concerne également un système multicomposant comprenant ledit polyuréthane.

L'invention concerne également un procédé d'assemblage de matériaux par collage, mettant en œuvre ledit polyuréthane.

ARRIERE-PLAN TECHNOLOGIQUE

On connait depuis longtemps des compositions adhésives (de colle ou mastic), à base de polyuréthane, notamment sous la forme de systèmes multicomposants (généralement bicomposants) dans lesquels les (deux) composants réactifs nécessaires à la synthèse du polyuréthane sont stockés de manière séparée, et mélangés au dernier moment avant utilisation de la composition adhésive.

Pour qu'un tel système soit correctement mis en œuvre, il est préférable que les composants réactifs présentent d'une part une réactivité suffisante pour que la réaction ait lieu et s'opère rapidement, et d'autre part une viscosité adaptée à la température de mélange pour que celui-ci s'opère aisément.

Traditionnellement, la synthèse d'un polyuréthane a lieu par une réaction de polyaddition entre un polyol et un polyisocyanate.

Toutefois, les polyisocyanates sont des composés très sensibles en présence d'humidité atmosphérique et nécessitent de prendre des mesures appropriées pour éviter leur réticulation prématurée, et donc leur perte de réactivité, au cours de leur manipulation et de leur stockage (conditions anhydres). De plus, certains de ces composés, tels que l'hexaméthylène diisocyanate (HDI), l'isophorone diisocyanate (IPDI), le toluène diisocyanate (TDI) ou le diisocyanate de diphényle méthane (MDI) sont connus comme présentant des risques toxicologiques pour l'homme et l'environnement, et peuvent même générer des émissions toxiques pour les plus volatiles.

L'utilisation et le stockage de grande quantité de tels polyisocyanates est donc à éviter car cela nécessite de mettre en place des dispositifs de sécurité complexes et coûteux adaptés à leur utilisation et leur stockage. En particulier, on souhaite éviter d'avoir recours à de tels composés lors de la dernière étape de synthèse du polyuréthane, afin de pouvoir mettre à disposition du public des compositions adhésives à base de polyuréthane sous forme de systèmes multicomposants, plus respectueux de l'homme et son environnement et plus stable au stockage.

En outre, lorsqu'on désire formuler des compositions sous forme de kit transportable, pratique, facile et rapide à mettre en œuvre à la demande (« Do It Yourself »), le mélange des réactifs doit pouvoir se faire autant que possible sur des volumes restreints et à basse température, notamment à température ambiante.

WO2015/140457 décrit des systèmes multi-composants, et en particulier des systèmes bi-composant, obtenus par mélange d'un composant A comprenant au moins un prépolymère de polyuréthane fonctionnalisé par du carbonate de glycérol en bout de chaîne avec un composant B comprenant au moins deux groupes amine primaire et/ou secondaire. Bien que ces compositions présentent l'avantage de ne pas utiliser de polyisocyanate lors du mélangeage des composants A et B, la réaction des groupes (2-oxo-1,3-dioxolan-4-yl) du composant A avec les groupes amine primaire et/ou secondaire du composant B est lente à basse température. Il est donc nécessaire de réaliser le mélange desdits composants à une température élevée, par exemple à 80°C. Ainsi, de tels systèmes restent à améliorer en termes de réactivité.

Par conséquent, il existe un besoin de mettre à disposition des compositions à base de polyuréthane ne présentant pas les inconvénients de l'art antérieur. Plus particulièrement existe un besoin de nouvelles compositions à base de polyuréthane présentant une meilleure réactivité à basse température, tout en conservant des propriétés adhésives satisfaisantes.

Il existe également un besoin de formuler des compositions à base de polyuréthane, disponibles sous forme de système multicomposants et notamment bicomposants, qui soient plus faciles à utiliser comparativement à l'art antérieur, à des températures de mélangeage et de réaction inférieures à 60°C, de préférence inférieure ou égale à 35°C, et plus préférentiellement proche de la température ambiante (23°C).

En particulier, il existe un besoin de trouver des compositions disponibles sous forme de systèmes multicomposants, notamment transportables (kits), respectueuses de l'homme et de l'environnement.

Il existe également un besoin de mettre à disposition des systèmes multicomposants dont la mise en œuvre conduit à des compositions adhésives, notamment des compositions de colle ou de mastic, présentant des performances mécaniques (par exemple élongation et/ou module) adaptées à l'utilisation de la composition adhésive.

Il existe en outre un besoin de mettre au point un procédé de préparation de telles compositions adhésives, qui soit économique, rapide à mettre en œuvre, et respectueux de l'homme et de l'environnement. Il est recherché

notamment un procédé de préparation de telles compositions peu coûteux en énergie et ne mettant pas en œuvre de grande quantité de solvant.

DESCRIPTION DE L'INVENTION

Dans la présente demande, en l'absence d'indication contraire :

- les quantités exprimées sous la forme de pourcentage correspondent à des pourcentages poids/poids ;
- les masses molaires moyennes en nombre, exprimées en gramme par mole (g/mol) sont déterminées par calcul par l'analyse de la teneur en groupes terminaux (NCO, OH et fonctions T) exprimée en milliéquivalent par gramme (méq/g) et la fonctionnalité (nombre de fonctions NCO, OH ou fonctions T par mole) du composé considéré (composé (PP1), polyéther polyol, composé de formule (IV) ou polyuréthane comprenant au moins deux fonctions terminales T (PP2) respectivement) ;
- l'indice hydroxyle d'un produit alcoolique représente le nombre de fonctions hydroxyles par gramme de produit, et est exprimé sous la forme du nombre équivalent de milligrammes de potasse (KOH) utilisés dans le dosage des fonctions hydroxyles, par gramme de produit ;
- la mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn) ;
- la mesure de viscosité à 60°C peut se faire à l'aide d'un viscosimètre Brookfield RVT couplé avec un module chauffant de type Thermosel de la marque Brookfield, d'un mobile adapté au domaine de viscosité et à une vitesse de rotation de 20 tours par minute.

**A. Polyuréthane**

La présente invention concerne un polyuréthane (PP2) comprenant :

- au moins deux, de préférence deux ou trois, fonctions terminales T de formule (I) suivante :

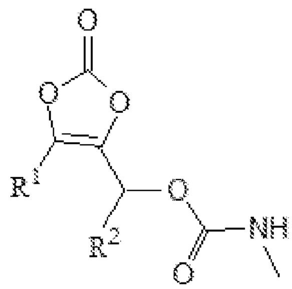

(I)

dans laquelle $R^1$ et $R^2$, identiques ou différents, représentent chacun un atome d'hydrogène, un groupe alkyle linéaire ou ramifié de préférence en C1-C6, un groupe cycloalkyle de préférence en C5-C6, un groupe phényle de préférence en C6-C12, ou un groupe alkylphényle avec une chaîne alkyle, linéaire ou ramifiée, de préférence en C1-C4 ; ou $R^1$ et $R^2$ peuvent être liés ensemble pour former un groupement-$(CH_2)_n$- avec n = 3, 4 ou 5,
et

- au moins un motif divalent de formule (II) suivante:

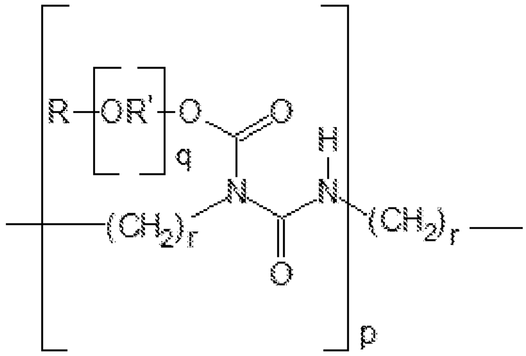

(II)

dans laquelle :

- p est un nombre entier allant de 1 à 2 ;
- q est un nombre entier allant de 0 à 9 ;
- r est un nombre entier valant 5 ou 6 ;
- R représente une chaîne hydrocarbonée, saturée ou insaturée, cyclique ou acyclique, linéaire ou ramifiée, comprenant de 1 à 20 atomes de carbone ; et
- R' représente un groupe divalent hydrocarboné, linéaire ou ramifié, saturé, ayant de 2 à 4 atomes de carbone.

De préférence, le polyuréthane (PP2) susmentionné comprend en outre au moins l'un des radicaux divalents $R^3$ suivants :

a) le radical divalent -$(CH_2)$5- dérivé du pentaméthylène diisocyanate (PDI) ;
b) le radical divalent $-(CH_2)_6-$ dérivé de l'hexaméthylène diisocyanate (HDI) ;
c) le radical divalent dérivé de l'isophorone :

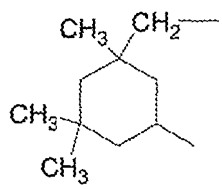

d) le radical divalent dérivé TDI ;
e) le radical divalent dérivé du MDI ;
f) le radical divalent dérivé du xylylène diisocyanate (XDI) ;
g) le radical divalent dérivé du 1,3-bis(isocyanatométhyl)cyclohexane (m-H6XDI) :

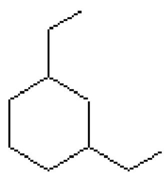

h) le radical divalent dérivé du 4,4'-Méthylene dicyclohexyl diisocyanate (H12MDI) :

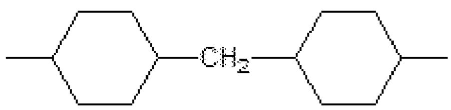

De préférence, le polyuréthane (PP2) susmentionné comprend en outre au moins l'un des radicaux divalents $R^3$ suivants :

a) le radical divalent -($CH_2$)5- dérivé du pentaméthylène diisocyanate (PDI) ;

b) le radical divalent -$(CH_2)_6$- dérivé de l'hexaméthylène diisocyanate (HDI) ;

c) le radical divalent dérivé de l'isophorone :

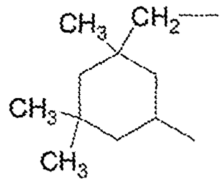

d) le radical divalent dérivé du 2,4-TDI :

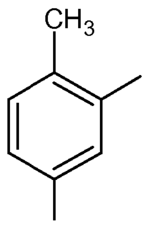

e) le radical divalent dérivé du 2,4'-MDI:

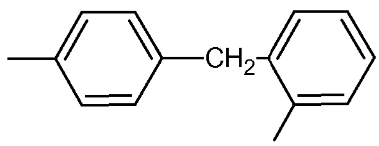

f) le radical divalent dérivé du méta-xylylène diisocyanate (m-XDI) :

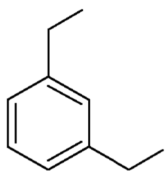

g) le radical divalent dérivé du 1,3-bis(isocyanatométhyl)cyclohexane (m-H6XDI) :

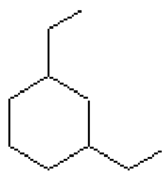

h) le radical divalent dérivé du 4,4'-Méthylène dicyclohexyl diisocyanate (H12MDI) :

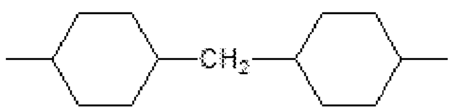

De préférence, le polyuréthane (PP2) susmentionné comprend au moins une unité répétitive comprenant au moins l'un des radicaux divalents $R^3$ tels que décrits précédemment.

Selon un mode de réalisation, le polyuréthane (PP2) susmentionné a la formule (III) suivante :

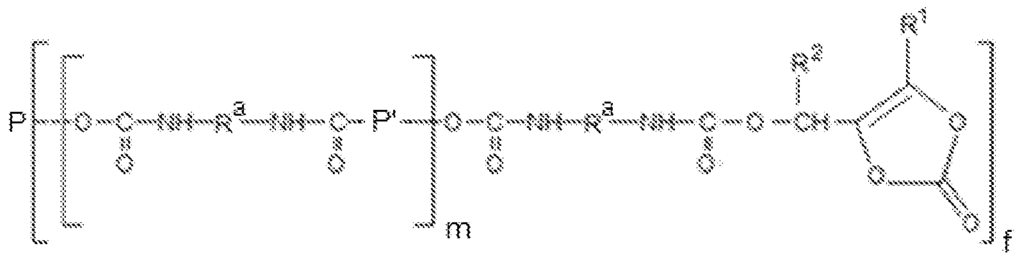

dans laquelle :

- ■ $R^1$ et $R^2$ sont tels que définis ci-dessus, $R^1$ étant de préférence un méthyle et $R^2$ étant de préférence un atome d'hydrogène ;
- ■ P représente l'une des deux formules ci-dessous :

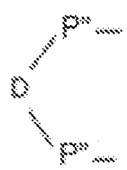

ou

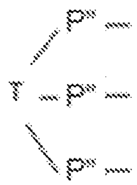

dans lesquelles D et T représentent, indépendamment l'un de l'autre, un radical hydrocarboné comprenant de 2 à 66 atomes de carbone, linéaire ou ramifié, cyclique, alicyclique ou aromatique, saturé ou insaturé, comprenant éventuellement un ou plusieurs hétéroatomes ;

- ■ P' et P" étant, indépendamment l'un de l'autre, un radical divalent issu d'un polyol de préférence choisi parmi les polyéther polyols, les polycarbonate polyols, les polyerster polyols, les polydiène polyols, et leurs mélanges, les polyols étant préférentiellement ceux décrits ci-après pour l'étape E1 ;
- ■ m et f sont des nombres entiers tel que la masse moléculaire moyenne du polyuréthane va de 600 à 100 000 g/mol ;
- ■ f est égal à 2 ou 3 ;
- ■ $R^a$ représente un radical divalent choisi parmi les radicaux $R^3$ tels que définis ci-dessus, et le motif divalent de formule (II) telle que définie ci-dessus, au moins un $R^a$ étant un motif divalent de formule (II).

Selon un mode de réalisation, le polyuréthane (PP2) susmentionné a la formule (III') suivante :

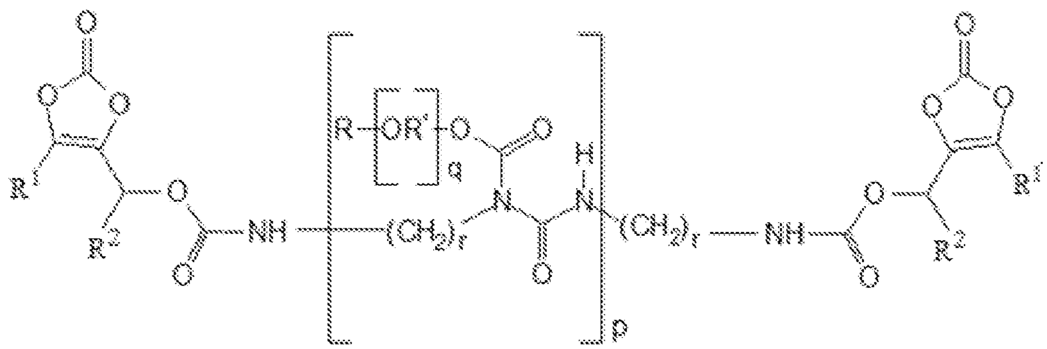

(III')

dans laquelle $R^1$, $R^2$, R, R', r, q et p sont tels que définis précédemment.

Le polyuréthane (PP2) susmentionné peut posséder une viscosité mesurée à température ambiante (23°C) inférieure ou égale à 1 500 Pa.s, plus préférentiellement inférieure ou égale à 600 Pa.s, et mieux encore inférieure ou égale à 400 Pa.s.

Le polyuréthane à (PP2) susmentionné, peut posséder une viscosité mesurée à 60°C inférieure ou égale à 50 Pa.s, plus préférentiellement inférieure ou égale à 40 Pa.s, et mieux encore inférieure ou égale à 30 Pa.s.

De préférence, le polyuréthane) (PP2) susmentionné possède une viscosité mesurée à température ambiante

(23°C) inférieure ou égale à 600 Pa.s et une viscosité mesurée à 60°C inférieure ou égale à 40 Pa.s.

Le polyuréthane (PP2) susmentionné comprenant au moins deux fonctions terminales T peut être obtenu par réaction d'un composé (PP1) comprenant au moins deux groupes NCO et au moins un motif divalent de formule (II) susmentionnée, avec au moins un composé de formule (IV) suivante :

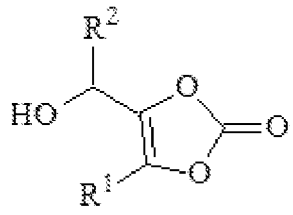

(IV)

dans laquelle $R^1$ et $R^2$, identiques ou différents, représentent chacun un atome d'hydrogène, un groupe alkyle linéaire ou ramifié de préférence en C1-C6, un groupe cycloalkyle de préférence en C5-C6, un groupe phényle de préférence en C6-C12, ou un groupe alkylphényle avec une chaîne alkyle, linéaire ou ramifiée, de préférence en C1-C4 ; ou $R^1$ et $R^2$ peuvent être liés ensemble pour former un groupement $-(CH_2-)_n-$ avec n = 3, 4 ou 5.

Les composés de formule (IV) peuvent être synthétisés tel que décrit dans EP0078413, par exemple selon le schéma suivant :

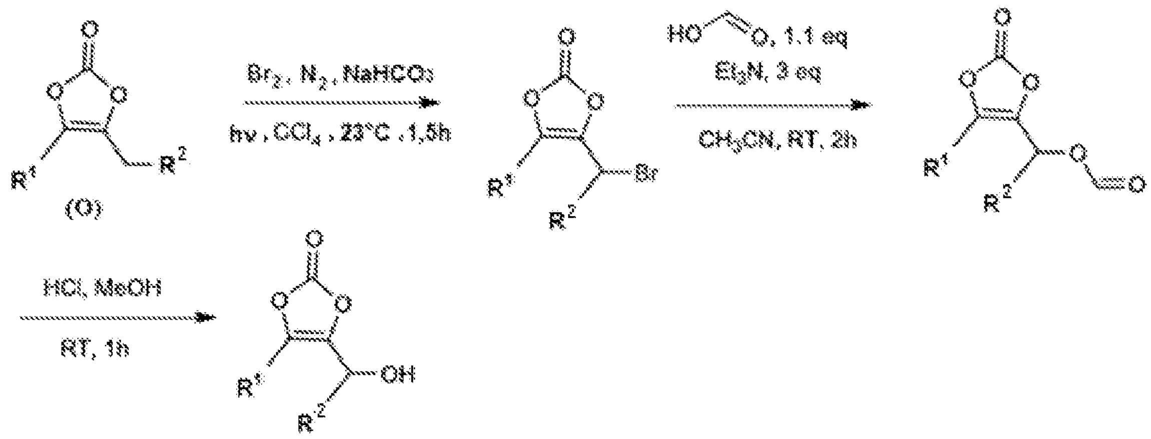


Le composé (O) susmentionné peut être synthétisé par les méthodes décrites dans Liebigs Annalen der Chemie, Vol. 764, pages 116-124 (1972), Tetrahedron Letters, 1972, pages 1701-1704 ou US 3,020,290.

Les composés de formule (IV) peuvent également être préparés tel que décrit dans WO 96/02253.

Selon un mode de réalisation préféré les composés de formule (IV) sont ceux répondant à la formule (IV-1) suivante :

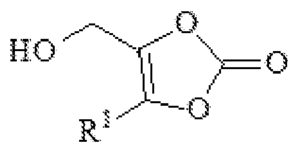

(IV-1)

dans laquelle $R^1$ est tel que défini précédemment. Les composés de formule (IV-1) sont des composés de formule (IV) dans laquelle $R^2$ est un hydrogène.

Selon un mode de réalisation préféré, les composés de formule (IV) ont la formule (IV-1 a) suivante :

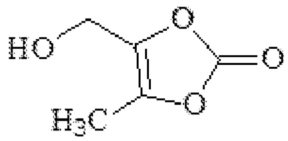

(IV-1a)

Le composé de formule (IV-1 a) est le 4-hydroxyméthyl-5-méthyl-1,3-dioxolen-2-one.

Le composé de formule (IV-1a) est un composé de formule (IV) dans laquelle $R^2$ est un hydrogène, et $R^1$ est un méthyle. Le composé de formule (IV-1a) peut être obtenu tel que décrit dans WO 96/02253, à savoir en particulier selon le schéma suivant :

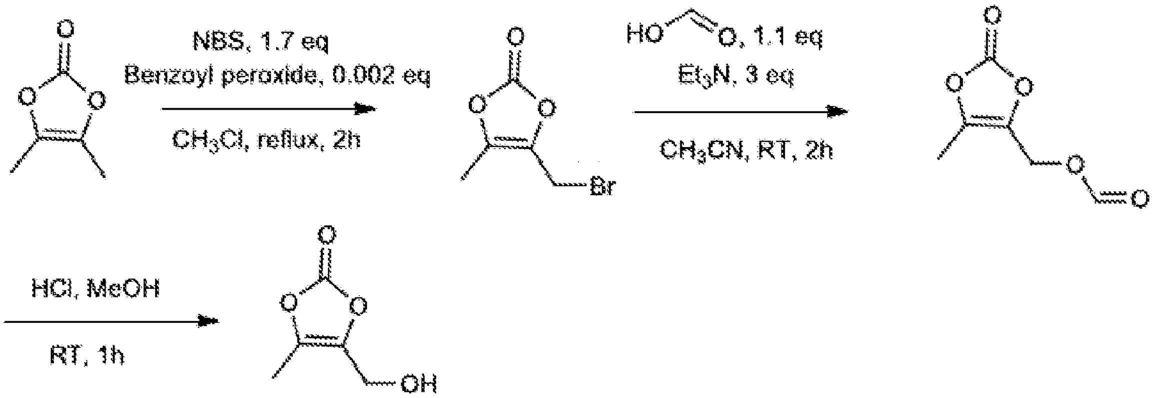


## B. Procédé

La présente invention concerne également un procédé de préparation d'un polyuréthane (PP2) susmentionné comprenant une étape de réaction de polyaddition (notée E2) :

- d'au moins un composé (PP1) possédant au moins deux groupes NCO et au moins un motif divalent de formule (II) :

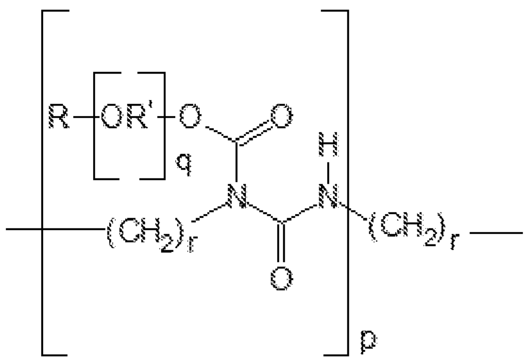

(II)

dans laquelle :

- p est un nombre entier allant de 1 à 2 ;
- q est un nombre entier allant de 0 à 9 ;
- r est un nombre entier égal à 5 ou 6 ;
- R représente une chaîne hydrocarbonée, saturée ou insaturée, cyclique ou acyclique, linéaire ou ramifiée, comprenant de 1 à 20 atomes de carbone ;
- R représente un groupe divalent hydrocarboné, linéaire ou ramifié, saturé, ayant de 2 à 4 atomes de carbone ;

- avec au moins un composé de formule (IV),
dans des quantités de composé(s) (PP1) et de composé(s) de formule (IV) conduisant à un rapport molaire NCO/OH,

noté $r_2$, inférieur ou égal à 1, de préférence allant de 0,8 à 1, et préférentiellement de 0,85 à 1,0.

Dans le cadre de l'invention, et sauf mention contraire, $r_2$ est le rapport molaire NCO/OH correspondant au rapport molaire du nombre de groupes isocyanates sur le nombre de groupes hydroxyles portés respectivement par l'ensemble des isocyanate(s) (composé(s) (PP1) et éventuellement le(s) polyisocyanate(s) non réagi(s) à l'issue de l'étape E1), et alcool(s) présents dans le milieu réactionnel de l'étape E2.

***Etape E2***

Le composé de formule (IV) utilisable pour préparer le polyuréthane (PP2) selon l'invention peut être mis en œuvre soit pur, soit sous la forme d'un mélange ou composition de composés de formule (IV) contenant au moins 95% en poids composé de formule (IV).

Le composé (PP1) utilisé présente une teneur en groupe NCO allant de préférence de 0,5 à 15% en poids dudit composé.

Le(s) composé(s) (PP1) utilisé(s) peu(ven)t être mis en œuvre soit pur, soit sous la forme d'une composition comprenant essentiellement le(s)dit(s) composé(s) et une faible teneur en polyisocyanate(s) résiduel(s) issu(s) de la synthèse dudit (desdits) composé(s). Dans ce dernier cas, le(s) composé(s) (PP1) utilisé(s) est (sont) tel(s) que la teneur en groupes NCO présents dans ladite composition va de préférence de 0,5 à 15% en poids par rapport au poids de ladite composition.

Selon un mode de réalisation, le(s) composé(s) (PP1) possédant au moins deux groupes NCO et au moins un motif divalent de formule (II) telle que définie précédemment, est (sont) de préférence choisi(s) parmi les dérivés d'allophanate d'hexaméthylène diisocyanate (HDI) de formule (IIA) suivante :

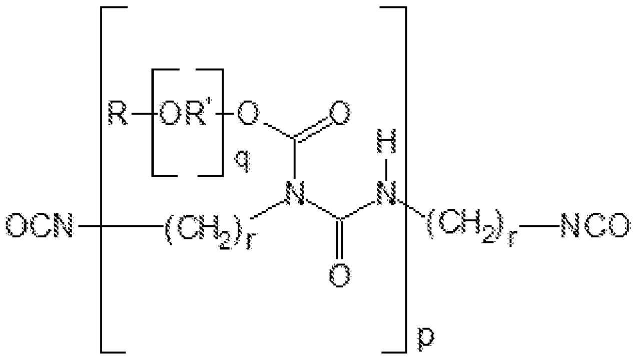

(IIA)

dans laquelle :

- p est un nombre entier allant de 1 à 2 ;
- q est un nombre entier allant de 0 à 9 ;
- r est un nombre entier égal à 5 ou 6 ;
- R représente une chaîne hydrocarbonée, saturée ou insaturée, cyclique ou acyclique, linéaire ou ramifiée, comprenant de 1 à 20 atomes de carbone ;
- R' représente un groupe divalent hydrocarboné, linéaire ou ramifié, saturé, ayant de 2 à 4 atomes de carbone.

De préférence, p, q, R et R' sont choisis tels que le dérivé d'allophanate de HDI de formule (IIA) comporte un pourcentage en poids de groupe isocyanate allant de 12 à 14% en poids par rapport au poids dudit dérivé. Plus préférentiellement,

- p est un nombre entier allant de 1 à 2 ;
- q est un nombre entier allant de 2 à 5 ;
- R représente une chaîne hydrocarbonée, saturée ou insaturée, cyclique ou acyclique, linéaire ou ramifiée, comprenant de 6 à 14 atomes de carbone ;
- R' représente un groupe divalent propylène.

Le composé (PP1) utilisable selon l'invention peut être mis en œuvre pur ou sous la forme d'une composition ou mélange contenant essentiellement au moins un dérivé de formule (IIA) et une faible teneur en composé(s) polyisocyanate(s) résiduel(s) issu(s) de la synthèse dudit dérivé. La teneur en composé(s) polyisocyanate(s) résiduel(s) tolérée (correspondant au HDI) est telle que la mise en œuvre dudit mélange n'a avantageusement pas d'impact sur les propriétés finales du polyuréthane (PP2).

En particulier, le composé (PP1) utilisable selon l'invention peut-être mis en œuvre sous la forme d'une composition comprenant au moins 99,5% en poids, de préférence au moins 99,8% en poids de dérivé(s) de formule (IIA), et moins de 0,5% en poids, de préférence moins de 0,2% en poids de HDI, par rapport au poids total de ladite composition.

Une telle composition peut être obtenue par exemple par:

- réaction de carbamatation allant de 80 à 100°C d'un mono alcool saturé ou insaturé, acyclique, linéaire ou ramifié, comprenant de 1 à 20 atomes de carbone, et oxyalkylé dont la partie alkylène est linéaire ou ramifiée et comprend de 1 à 4 atomes de carbone, avec un premier monomère de HDI, dans un rapport molaire NCO/OH supérieur à 2, avantageusement supérieur à 4, de préférence supérieur à 8, puis
- réaction d'allophanatation à une température allant de 100 à 180°C, de préférence autour de 140°C, du composé carbamate obtenu possédant une fonction hydroxyle, avec un deuxième monomère de HDI, dans un rapport molaire NCO/OH compris de 5 à 20, et
- distillation des monomères de HDI non réagis, afin d'obtenir un réactif comprenant moins de 0,5% en poids de HDI, de préférence moins de 0,2% en poids de HDI.

De préférence, la teneur en groupes NCO (aussi désigné par « taux de NCO » et noté % NCO) présents dans la composition de dérivé(s) de formule (IIA) va de 12 à 14% en poids par rapport au poids de ladite composition.

Par « teneur en groupes NCO présents dans la composition » (aussi désigné par « taux de NCO », noté % NCO), on entend la teneur en groupes isocyanate portés par l'ensemble des composés présents dans la composition (composé (PP1) et les autres espèces porteuses de groupe(s) isocyanate présentes, tels que les monomères polyisocyanates non réagis (HDI)). Cette teneur en groupe NCO est calculable de manière bien connue par l'homme du métier et est exprimée en pourcentage en poids par rapport au poids total du milieu réactionnel.

Le dérivé de formule (IIA) utilisable pour préparer le polyuréthane (PP2) selon l'invention est notamment commercialisé sous le nom de « TOLONATE® » par la société VENCOREX. On peut citer en particulier le « TOLONATE® X FLO 100» correspondant à une composition comprenant au moins 99,5% en poids de dérivé d'allophanate de HDI de formule (IIA) et moins de 0,5% en poids de HDI par rapport au poids de ladite composition.

A titre d'exemple de composé de formule (IV), on peut citer le 4-hydroxyméthyl-5-méthyl-1,3-dioxolen-2-one disponible chez FLUOROCHEM et OXCHEM avec une masse molaire de 130,1 g/mol et un indice hydroxyle voisin de 431 mg KOH/g de composition.

Lorsque le composé (PP1) utilisé et/ou le composé de formule (IV) utilisé, est ou sont sous la forme d'une composition ou mélange comprenant essentiellement le(s)dit(s) composé(s) (PP1) et/ou composé(s) de formule (IV) respectivement, comme décrit plus haut, le calcul du rapport r2 tient compte d'une part des groupes NCO portés par le composé (PP1), mais également les isocyanates éventuellement en mélange avec le(s) composé(s) (PP1) et/ou d'autre part des groupes OH portés par le(s) composé(s) de formule (IV), mais également le(s) composé(s) polyol(s) résiduel(s) éventuellement en mélange avec le(s) composé(s) de formule (IV).

L'étape E2 peut être réalisée à une température T2 inférieure à 95°C, et/ou dans des conditions anhydres.

A l'issue de l'étape E2, le milieu réactionnel est de préférence exempt de monomères diisocyanates potentiellement toxiques (HDI). Dans ce cas, le polyuréthane (PP2) selon l'invention ne présente avantageusement pas de risques toxicologiques liés à la présence de tels monomères.

A l'issue de l'étape E2, le polyuréthane (PP2) selon l'invention, présente de préférence de 0,1 à 5, de préférence de 2 à 3 milliéquivalent de fonctions T par gramme dudit polyuréthane (PP2).

***Etape E1***

Selon un autre mode de réalisation le(s) composé(s) (PP1) possédant au moins deux groupes NCO et au moins un motif divalent de formule (II) telle que définie précédemment, est (sont) de préférence choisi(s) parmi les polyuréthanes à terminaisons NCO susceptible(s) d'être obtenu(s) par une réaction de polyaddition (notée étape E1):

(i) d'une composition de polyisocyanate(s), et en particulier de diisocyanates, comprenant au moins un dérivé d'allophanate d'hexaméthylène diisocyanate (HDI) de formule (IIA) telle que définie précédemment, et

(ii) avec une composition de polyol(s), ledit(lesdits) polyol(s) étant de préférence choisi(s) parmi les polyéther polyols, les polyester polyols, les polydiène polyols, les polycarbonate polyols, et leurs mélanges, et préférentiellement parmi les polyéther polyols,

dans des quantités de polyisocyanate(s) et de polyol(s) conduisant à un rapport molaire NCO/OH, noté r1, strictement supérieur à 1, et de préférence allant de 1,6 à 1,9.

Dans le cadre de l'invention, et sauf mention contraire, $r_1$ est le rapport molaire NCO/OH correspondant au rapport molaire du nombre de groupes isocyanates (NCO) sur le nombre de groupes hydroxyles (OH) portés respectivement par l'ensemble des polyisocyanate(s) et polyol(s) présents dans le milieu réactionnel de l'étape E1.

Dans le cas où le composé (PP1) est un polyuréthane à terminaisons NCO issu de l'étape E1, le polyuréthane (PP2) obtenu présente de préférence de 0,1 à 1,5 milliéquivalent(s) de fonctions T par gramme dudit polyuréthane (PP2), plus préférentiellement de 0,15 à 1 milliéquivalent de fonctions T dudit polyuréthane (PP2) et mieux encore de 0,2 à 0,8 milliéquivalent de fonctions T par gramme dudit polyuréthane (PP2).

Le polyuréthane (PP1) susmentionné peut comprendre en outre au moins l'un des radicaux divalents $R^3$ suivants, de préférence peut comprendre au moins une unité répétitive comprenant au moins l'un des radicaux $R^3$ suivants :

a) le radical divalent $-(CH_2)5-$ dérivé du pentaméthylène diisocyanate (PDI) ;
b) le radical divalent $-(CH_2)_6-$ dérivé de l'hexaméthylène diisocyanate (HDI) ;
c) le radical divalent dérivé de l'isophorone :

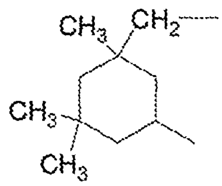

d) le radical divalent dérivé du 2,4-TDI :

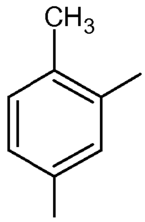

e) le radical divalent dérivé du 2,4'-MDI:

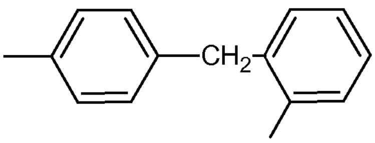

f) le radical divalent dérivé du méta-xylylène diisocyanate (m-XDI) :

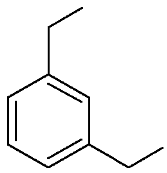

g) le radical divalent dérivé du 1,3-bis(isocyanatométhyl)cyclohexane (m-H6XDI) :

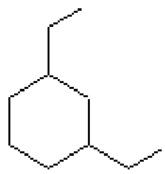

h) le radical divalent dérivé du 4,4'-Méthylène dicyclohexyl diisocyanate (H12MDI) :

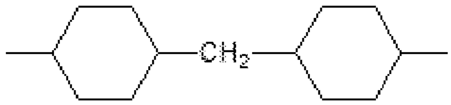

A l'issue de l'étape E1, le polyuréthane à terminaisons NCO (composé PP1) obtenu est tel que la teneur en groupes NCO (aussi désigné par « taux de NCO » et noté % NCO) présents dans le milieu réactionnel de l'étape E1 va de préférence de 0,5 à 5,7 %, plus préférentiellement de 0,7 à 3 %, et mieux encore de 1 à 2,5% par rapport au poids du milieu réactionnel de l'étape E1.

Par « teneur en groupes NCO présents dans le milieu réactionnel» (aussi désigné par « taux de NCO », noté % NCO), on entend la teneur en groupes isocyanates portés par l'ensemble des composés présents dans le milieu réactionnel, à savoir le polyuréthane à terminaisons NCO (composé PP1) formé et les autres espèces porteuses de groupe(s) isocyanate présentes dans la composition de polyisocyanates susmentionnée et non réagies. Cette teneur en groupe NCO est calculable de manière bien connue par l'homme du métier et est exprimée en pourcentage en poids par rapport au poids total du milieu réactionnel.

*Polyisocyanates*

La composition de polyisocyanate(s) susmentionnée comprend de préférence, en plus du ou des dérivés d'allophanate d'hexaméthylène diisocyanate (HDI) de formule (IIA), au moins un diisocyanate différent, choisi par exemple parmi l'IPDI, le PDI, le HDI, le TDI (et de préférence le 2,4-TDI), le MDI (et préférentiellement le 2,4'-MDI), le XDI (et en particulier le m-XDI), le m-H6XDI, le H12MDI, et leurs mélanges, de préférence parmi l'IPDI, le 2,4-TDI, le 2,4'-MDI, le m-XDI et leurs mélanges.

Selon un mode de réalisation préféré, le(s) composé(s) (PP1) possédant au moins deux groupes NCO, est (sont) de préférence choisi(s) parmi les polyuréthanes à terminaisons NCO susceptible(s) d'être obtenu(s) par une réaction de polyaddition (notée E1):

(i) d'une composition de polyisocyanate(s) constituée d'au moins un dérivé d'allophanate d'hexaméthylène diisocyanate (HDI) de formule (IIA) telle que définie plus haut, et éventuellement d'au moins un diisocyanate choisi parmi :

a1) l'isophorone diisocyanate (IPDI) (dont le pourcentage en poids de groupe isocyanate est égale à 38% en poids environ par rapport au poids d'IPDI),
a2) le 2,4-toluène diisocyanate (2,4-TDI) (dont le pourcentage en poids de groupe isocyanate est égale à 48% en poids environ par rapport au poids de 2,4-TDI),
a3) le 2,4'-diisocyanate de diphényleméthane (2,4'-MDI) (dont le pourcentage en poids de groupe isocyanate est égale à 34% en poids environ par rapport au poids de 2,4'-MDI),
a4) le méta-xylylène diisocyanate (m-XDI),
a5) le 1,3-bis(isocyanatométhyl)cyclohexane (m-H6XDI) ;
a6) le 4,4'-Méthylène dicyclohexyl diisocyanate (H12MDI) ;
a7) et leurs mélanges,
de préférence le au moins un diisocyanate est choisi parmi les diisocyanates a1) à a4) et leurs mélanges,

(ii) avec au moins un polyol, de préférence choisi parmi les polyéther polyols, les polyester polyols, les polydiène polyols, les polycarbonate polyols, et leurs mélanges, préférentiellement les polyéther polyols,
éventuellement en présence d'un catalyseur de réaction, et
dans des quantités de polyisocyanate(s) et de polyol(s) conduisant à un rapport molaire NCO/OH, r1, strictement supérieur à 1, et de préférence allant de 1,6 à 1,9, préférentiellement allant de 1,65 à 1,85.

Le(s) polyisocyanate(s) cité(s) en a2) et a3) utilisable(s) dans la composition de polyisocyanate(s) (i), peu(ven)t être mis en œuvre sous la forme d'un mélange contenant essentiellement le(s)dit(s) polyisocyanate(s) et une faible teneur en composé(s) polyisocyanate(s) résiduel(s) (correspondant aux isomères du 2,4-TDI, et du 2,4'-MDI respectivement) issu(s) de la synthèse dudit (desdits) polyisocyanate(s) cité(s) en a2) et a3). La teneur en composé(s) polyisocyanate(s) résiduel(s) tolérée est telle que la mise en œuvre dudit mélange n'a avantageusement pas d'impact sur les propriétés finales du polyuréthane (PP2).

Par exemple, le(s) polyisocyanate(s) cité(s) en a2) et a3) utilisable(s) dans la composition de polyisocyanate(s) (i), peu(ven)t être mis en œuvre sous la forme d'un mélange contenant au moins 99% en poids de polyisocyanate(s) et

moins de 1% en poids de composé(s) polyisocyanate(s) résiduel(s), de préférence sous la forme d'un mélange contenant au moins 99,5% en poids de polyisocyanate(s) et moins de 0,5% en poids de composé(s) polyisocyanate(s) résiduel(s), plus préférentiellement sous la forme d'un mélange contenant au moins 99,8% en poids de polyisocyanate(s) et moins de 0,2% en poids de composé(s) polyisocyanate(s) résiduel(s), par rapport au poids dudit mélange.

De préférence, la teneur en composé(s) polyisocyanate(s) résiduel(s) est telle que la teneur pondérale en groupe isocyanate dans ledit mélange reste environ égale à celle indiquée ci-dessus par rapport au poids du diisocyanate a2) et a3) seul.

Ainsi, le 2,4-TDI tel que cité en a2) peut être mis en œuvre sous la forme d'un TDI technique, disponible commercialement, correspondant à une composition dont la teneur en 2,4-TDI est d'au moins 99% en poids, et de préférence d'au moins 99,5% en poids, par rapport au poids de ladite composition.

Le 2,4'-MDI tel que cité en a3) peut être mis en œuvre sous la forme d'un MDI technique, disponible commercialement, correspondant à une composition dont la teneur en 2,4'-MDI est d'au moins 99% en poids, et de préférence d'au moins 99,5% en poids, par rapport au poids de ladite composition.

Le(s) diisocyanate(s) cité(s) en a1), a2), a3), a4), a5) et a6) utilisable(s) dans la composition de diisocyanate(s) (i) pour préparer le composé (PP1) utilisé selon l'invention sont largement disponibles dans le commerce. A titre d'exemple, on peut citer le « SCURANATE® T100 » commercialisé par la société VENCOREX, correspondant à un 2,4-TDI de pureté supérieure à 99% en poids, le « DESMODUR® I » commercialisé par la société BAYER, correspondant à un IPDI, le « TAKENATE ™ 500 » commercialisé par MITSUI CHEMICALS correspondant à un m-XDI, le « TAKENATE ™ 600 » commercialisé par MITSUI CHEMICALS correspondant à un m-H6XDI, le « VESTANAT® H12MDI » commercialisé par EVONIK correspondant à un H12MDI.

*Polyols*

La composition de polyol(s) susmentionnée peut comprendre au moins un polyol choisi dans le groupe constitué des polyéther polyols, des polyester polyols, des polydiène polyols, des polycarbonate polyols, et de leurs mélanges.

De préférence, le(s) polyol(s) est(sont) choisi(s) parmi les polyéther polyols.

Le(s) polyol(s) utilisable(s) pour préparer le polyuréthane à terminaisons NCO utilisé selon l'invention peu(ven)t être choisi(s) parmi ceux dont la masse moléculaire moyenne en nombre va de 200 à 20 000 g/mol, de préférence de 250 à 18 000 g/mol, et mieux encore de 2 000 à 12 000 g/mol.

De préférence, leur fonctionnalité hydroxyle va de 2 à 3. La fonctionnalité hydroxyle est le nombre moyen de fonction hydroxyle par mole de polyol.

De préférence, le(s) polyol(s) utilisable(s) selon l'invention présente(nt) un hydroxyle (IOH) allant de 9 à 105 mg KOH/g, et de préférence de 13 à 90 mg KOH/g, plus préférentiellement de 25 à 70 mg KOH/g, et mieux encore de 40 à 65 mg KOH/g de polyol.

Le(s) polyéther polyol(s) utilisable(s) selon l'invention est (sont) de préférence choisi(s) parmi les polyoxyalkylène polyols, dont la partie alkylène, linéaire ou ramifiée, comprend de 1 à 4 atomes de carbone, de préférence de 2 à 3 atomes de carbone.

Plus préférentiellement, le(s) polyéther polyol(s) utilisable(s) selon l'invention est (sont) de préférence choisi(s) parmi les polyoxyalkylène diols ou polyoxyalkylène triols, et mieux encore des polyoxyalkylène diols, dont la partie alkylène, linéaire ou ramifiée, comprend de 1 à 4 atomes de carbone, de préférence de 2 à 3 atomes de carbone, et dont la masse moléculaire moyenne va de 200 à 20 000 g/mol, et de préférence de 2 000 à 12 000 g/mol.

A titre d'exemple de polyoxyalkylène diols ou triols utilisables selon l'invention, on peut citer :

- les polyoxypropylène diols ou triols (aussi désignés par polypropylène glycols (PPG) diols ou triols) ayant une masse moléculaire moyenne allant de 400 à 18 000 g/mol et de préférence allant de 400 à 4000 g/mol ;
- les polyoxyéthylène diols ou triols (aussi désignés par polyéthylène glycols (PEG) diols ou triols) ayant une masse moléculaire moyenne allant de 400 à 18 000 g/mol et de préférence allant de 400 à 4000 g/mol ;
- les copolymères de PPG/PEG diols ou triols ayant une masse moléculaire moyenne allant de 400 à 18 000 g/mol et de préférence allant de 400 à 4000 g/mol ;
- les polytétrahydrofurane (PolyTHF) diols ou triols ayant une masse moléculaire moyenne allant de 250 à 4000 g/mol ;
- et leurs mélanges.

De préférence, le(s) polyéther polyol(s) utilisable(s) est (sont) choisi(s) parmi les polyoxypropylène diols ou triols avec un indice de polydispersité allant de 1 à 1,4, en particulier allant de 1 à 1,3. Cet indice correspond au rapport de la masse moléculaire moyenne en poids à la masse moléculaire moyenne en nombre du polyéther polyol (Ip =Mw/Mn) déterminées par GPC.

Les polyéther polyols suscités peuvent être préparés de manière conventionnelle, et sont largement disponibles dans le commerce. Ils peuvent être obtenus par polymérisation de l'oxyde d'alkylène correspondant en présence d'un

catalyseur à base d'un double complexe métal-cyanure.

A titre d'exemples de polyéther diols, on peut citer les polyoxypropylène diols commercialisés sous la dénomination « ACCLAIM® » par la société COVESTRO, tels que l' « ACCLAIM® 12200 » de masse moléculaire moyenne en nombre voisine de 11335 g/mol et dont l'indice hydroxyle va de 9 à 11 mg KOH/g, l'« ACCLAIM® 8200» de masse moléculaire moyenne en nombre voisine de 8057 g/mol et dont l'indice hydroxyle va de 13 à 15 mg KOH/g, et l'«Acclaim® 4200 » de masse moléculaire moyenne en nombre voisine de 4020 g/mol, et dont l'indice hydroxyle va de 26,5 à 29,5 mg KOH/g, ou encore le polyoxypropylène diol commercialisé sous la dénomination « VORANOL P2000 » par la société DOW de masse moléculaire moyenne en nombre voisine de 2004 g/mol et dont l'indice hydroxyle est de 56 mg KOH/g environ.

A titre d'exemples de polyéther triol, on peut citer le polyoxypropylène triol commercialisé sous la dénomination « VORANOL CP3355 » par la société DOW, de masse moléculaire moyenne en nombre voisine de 3554 g/mol et dont l'indice hydroxyle va de 40 à 50 mg KOH/g.

Le(s) polydiène polyol(s) utilisable(s) selon l'invention est(sont) choisi(s) de préférence parmi les polydiènes comportant des groupes hydroxyles terminaux, et leurs dérivés correspondants hydrogénés ou époxydés.

Plus préférentiellement, le(s) polydiène polyol(s) utilisable(s) selon l'invention est (sont) choisi(s) parmi les polybutadiènes comportant des groupes hydroxyles terminaux, éventuellement hydrogénés ou époxydés.

Mieux encore, le(s) polydiène polyol(s) utilisable(s) selon l'invention est (sont) choisi(s) parmi les homopolymères de butadiène comportant des groupes hydroxyles terminaux, éventuellement hydrogénés ou époxydés.

Par terminaux, on entend que les groupes hydroxyles sont situés aux extrémités de la chaîne principale du polydiène polyol.

Les dérivés hydrogénés suscités peuvent être obtenus par hydrogénation totale ou partielle des doubles liaisons d'un polydiène comportant des groupes hydroxyles terminaux, et sont donc saturé(s) ou insaturé(s).

Les dérivés époxydés suscités peuvent être obtenus par époxydation chémiosélective des doubles liaisons de la chaîne principale d'un polydiène comportant des groupes hydroxyles terminaux, et comportent donc au moins un groupe époxy dans sa chaîne principale.

A titre d'exemples de polybutadiène polyols, on peut citer les homopolymères de butadiène, saturé ou insaturé, comprenant des groupes hydroxyles terminaux, éventuellement époxydés, tels que par exemple ceux commercialisés sous la dénomination POLY BD® ou KRASOL® par la société CRAY VALLEY.

Les polyester polyols peuvent être choisis parmi les polyester diols et les polyester triols, et de préférence parmi les polyester diols.

Parmi les polyester polyols, on peut par exemple citer :

- les polyesters polyols d'origine naturelle tel que l'huile de ricin ;
- les polyesters polyols résultant de la condensation :
  - d'un ou plusieurs polyols aliphatiques (linéaires, ramifiés ou cycliques) ou aromatiques tels que par exemple l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyldiéthanolamine, et leurs mélanges, avec
  - un ou plusieurs acide polycarboxylique ou son dérivé ester ou anhydride tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que par exemple l'anhydride maléique ou phtalique, ou une lactone telle que par exemple la caprolactone.

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 :

- le TONE® 0240 (disponible auprès de UNION CARBIDE) qui est une polycaprolactone de masse moléculaire moyenne en nombre d'environ 2000 g/mol, et un point de fusion de 50°C environ,
- le DYNACOLL® 7381 (disponible auprès d'EVONIK) de masse moléculaire moyenne en nombre d'environ 3500 g/mol, et un point de fusion de 65°C environ,
- le DYNACOLL® 7360 (disponible auprès d'EVONIK) qui résulte de la condensation de l'acide adipique avec l'hexane diol, et a une masse moléculaire moyenne en nombre d'environ 3500 g/mol, et un point de fusion de 55°C environ,
- le DYNACOLL® 7330 (disponible auprès d'EVONIK) de masse moléculaire moyenne en nombre d'environ 3500 g/mol, et un point de fusion de 85°C environ,
- le DYNACOLL® 7363 (disponible auprès d'EVONIK) qui résulte également de la condensation de l'acide adipique

avec l'hexane diol, et a une masse moléculaire moyenne en nombre d'environ 5500 g/mol, et un point de fusion de 57°C environ,

- le DYNACOLL ® 7250 (commercialisé par EVONIK) : polyester polyol ayant une viscosité de 180 Pa.s à 23°C, une masse moléculaire moyenne en nombre Mn égale à 5 500 g/mol, et une $T_g$ égale à -50°C,
- le KURARAY ® P-6010 (commercialisé par KURARAY) : polyester polyol ayant une viscosité de 68 Pa.s à 23°C, une masse moléculaire moyenne en nombre égale à 6 000 g/mol, et une $T_g$ égale à -64°C,
- le KURARAY ® P-10010 (commercialisé par KURARAY) : polyester polyol ayant une viscosité de 687 Pa.s à 23°C, et une masse moléculaire moyenne en nombre égale à 10 000 g/mol.

A titre d'exemple de polyester diol, on peut également citer le REALKYD® XTR 10410 » commercialisé par la société CRAY VALLEY de masse moléculaire moyenne en nombre (Mn) voisine de 1000 g/mol et dont l'indice hydroxyle va de 108 à 116 mg KOH/g. Il s'agit d'un produit issu de la condensation d'acide adipique, de diéthylèneglycol et de monoéthylèneglycol.

Les polycarbonate polyols peuvent être choisis parmi les polycarbonate diols ou triols, ayant en particulier une masse moléculaire moyenne en nombre ($M_n$) allant de 300 g/mol à 12 000 g/mol, de préférence allant de 400 à 4 000 g/mol.

A titre d'exemple de polycarbonate diol, on peut citer :

- le CONVERGE POLYOL 212-10 et CONVERGE POLYOL 212-20 commercialisés par la société NOVOMER respectivement de masse moléculaire en nombre ($M_n$) égales à 1 000 et 2 000 g/mol dont les indices hydroxyles sont respectivement de 112 et 56 mg KOH/g,
- le DESMOPHEN® C XP 2716 commercialisé par COVESTRO de masse moléculaire en nombre ($M_n$) égale à 326 g/mol dont l'indice hydroxyle est de 344 mg KOH/g,
- les POLYOL C-590, C1090, C-2090 et C-3090 commercialisés par KURARAY ayant une masse moléculaire en nombre (Mn) allant de 500 à 3000 g/mol et un indice hydroxyle allant de 224 à 37 mg KOH/g.

La réaction de polyaddition de l'étape E1 peut être réalisée à une température T1 inférieure à 95°C et/ou dans des conditions anhydres.

La réaction de polyaddition de l'étape E1 peut être mise en œuvre en présence ou non d'au moins un catalyseur de réaction.

Le(s) catalyseur(s) de réaction utilisable(s) peu(ven)t être tout catalyseur connu de l'homme du métier pour catalyser la formation de polyuréthane par réaction d'au moins un polyisocyanate avec au moins un polyol tel que par exemple un polyéther polyol.

Une quantité allant jusque 0,3% en poids de catalyseur(s) par rapport au poids du milieu réactionnel de l'étape E1 peut être utilisée. En particulier, on préfère utiliser de 0,02 à 0,2% en poids de catalyseur(s) par rapport au poids du milieu réactionnel de l'étape E1.

***Autres étapes***

Le procédé susmentionné peut comprendre au moins une étape de purification des produits de réaction intermédiaire.

De préférence, le procédé selon l'invention ne comprend pas d'étape de purification des produits de réactions intermédiaires, ou d'étape d'élimination de solvant.

Selon un mode de réalisation, ledit procédé ne comprend pas d'étape consistant à ajouter un ou plusieurs solvant(s) et/ou plastifiant(s). Un tel procédé de préparation peut ainsi être avantageusement mis en œuvre sans interruption, avec des vitesses de ligne de production très élevées à l'échelle industrielle.

Selon un mode de réalisation préféré, le procédé selon l'invention consiste en une étape E2, éventuellement précédée d'une étape E1, les étapes E1 et E2 étant telles que définies dans l'un quelconque des paragraphes précédents.

La présente invention a également pour objet un polyuréthane (PP2) comprenant au moins deux, de préférence deux ou trois, fonctions terminales T de formule (I) susceptible d'être obtenu par un procédé de préparation selon l'invention, tel que décrit dans l'un quelconque des paragraphes précédents.

**C. Système multicomposant**

La présente invention a également pour objet un système multicomposant, de préférence sans solvant, comprenant au moins:

- comme premier composant (composant A), une composition comprenant au moins un polyuréthane (PP2) tel que défini ci-dessus, et

- comme deuxième composant (composant B), une composition comprenant au moins un composé aminé (B1) comprenant au moins deux groupes amine choisis parmi les groupes amine primaire, les groupes amine secondaire et leurs mélanges, de préférence comprenant au moins deux groupes amine primaire.

Les composants du système multicomposants sont généralement stockés séparément et sont mélangés au moment de l'emploi, à une température de mélange T3, pour former une composition, de préférence adhésive, destinée à être appliquée sur la surface d'un matériau.

Le mélange des composants du système multicomposants, et en particulier des composants A et B, peut être réalisé en conditions anhydres.

De préférence, les quantités de polyuréthane(s) à terminaisons (PP2) et de composé(s) aminé(s) (B1) présents dans le système multicomposant selon l'invention, conduisent à un rapport molaire du nombre de fonctions T sur le nombre de groupes amine primaire et/ou secondaire, noté r3, allant de 0,5 à 1, en particulier de 0,65 à 1, et plus préférentiellement de 0,8 à 1.

Dans le cadre de l'invention, et sauf mention contraire, le rapport molaire noté r3 correspond au rapport molaire du nombre total de fonctions T présentes dans le système multicomposant, sur le nombre total de groupes amine primaire et/ou secondaire présents dans le système multicomposant.

L'utilisation d'un tel rapport r3 permet avantageusement d'obtenir par une réaction de polyaddition entre le(s) polyuréthane(s) (PP2) et le(s) composé(s) aminés (B1), une composition, de préférence adhésive, présentant avantageusement des performances mécaniques satisfaisantes.

Le(s) composé(s) aminé(s) (B1) utilisé(s) selon l'invention possède(nt) de préférence une viscosité adaptée à la température de mélange T3. Le(s) composé(s) aminés (B1) utilisé(s) selon l'invention possède(nt) de préférence une alcalinité primaire allant de 0,4 à 34 méq/g, plus préférentiellement de 3,0 à 34 méq/g de composé aminé.

L'alcalinité primaire est le nombre de fonctions amine primaire $NH_2$ par gramme de composé aminé (B1), ledit nombre étant exprimé sous la forme de milliéquivalents de HCl (ou milliéquivalents de $NH_2$) utilisé dans le dosage des fonctions aminés, déterminé de manière bien connue par titrimétrie.

Le(s) composé(s) aminé(s) (B1) utilisé(s) selon l'invention peu(ven)t être des composés monomériques ou des polymériques.

Le(s) composé(s) aminé(s) (B1) peuvent comprendre en outre des groupes amine tertiaires.

Le(s) composé(s) aminé(s) (B1) utilisé(s) selon l'invention peu(ven)t être choisie(s) parmi des composés hydrocarbonés, linéaires, ramifiés, cycliques ou acycliques, saturés ou insaturés et comportant au moins deux groupes amine choisis parmi les groupes amine primaires, les groupes amine secondaires et leurs mélanges, de préférence comportant au moins deux groupes amine primaire $-NH_2$, la chaîne hydrocarbonée entre les fonctions amine (ou avantageusement $-CH_2-NH_2$) étant éventuellement interrompue par un ou plusieurs hétéroatomes choisi parmi O, N, S et/ou éventuellement interrompue par un ou plusieurs groupes divalents -NH- (amine secondaire), -COO- (ester), -CONH- (amide), - NHCO- (carbamate), -C=N- (imine), -CO- (carbonyle) et -SO- (sulfoxyde), et présentant de préférence une alcalinité primaire allant de 0,4 à 34 méq/g, plus préférentiellement de 3,0 à 34 méq/g de composé aminé.

A titre d'exemple de tels composés, on peut citer par exemple:

- les alkylène polyamines comportant au moins deux groupes amine primaire $-NH_2$
- les cycloalkylène polyamines comportant au moins deux groupes amine primaire - $NH_2$
- les polyamines comprenant à la fois des groupes alkyles et cycloalkyles et comportant au moins deux groupes amine primaire $-NH_2$
- les polyéther polyamines comportant au moins deux groupes amine primaire $-NH_2$
- les polyéthylène imines comportant au moins deux groupes amine primaire $-NH_2$
- les polypropylène imines comportant au moins deux groupes amine primaire $-NH_2$
- les polyamidoamines comportant au moins deux groupes amine primaire $-NH_2$ De préférence, le(s) composé(s) aminé(s) (B1) utilisé(s) selon l'invention possède(nt) deux ou trois groupes amines primaires.

Plus préférentiellement, le(s) composé(s)) aminé(s) (B1) utilisé(s) selon l'invention est (sont) choisi(s) parmi des composés hydrocarbonés, linéaires, ramifiés, cycliques ou acycliques, saturés et comportant deux ou trois groupes amines primaires $-NH_2$, lesdits composés étant éventuellement interrompus par un ou plusieurs hétéroatomes choisis parmi un atome d'oxygène -O- et un atome d'azote -N- et/ou un ou plusieurs groupes divalents amine secondaire -NH-,), le(s)dit(s) composé(s) aminé(s) présentant une alcalinité primaire allant de 0,4 à 34 méq/g, plus préférentiellement de 3,0 à 34 méq/g de composé aminé.

A titre d'exemple de tels composés, on peut citer par exemple:

- les alkylène diamines et alkylène triamines, comportant respectivement deux ou trois groupes amines primaires $-NH_2$,
- les cycloalkylène diamines et triamines, comportant respectivement deux ou trois groupes amines primaires $-NH_2$,

- les diamines et triamines comprenant à la fois des groupes alkyles et cycloalkyles, comportant respectivement deux ou trois groupes amines primaires $-NH_2$,
- les polyéther diamines et polyéther triamines, comportant respectivement deux ou trois groupes amines primaires $-NH_2$,
- les polyéthylène imines comportant deux ou trois groupes amines primaires $-NH_2$,
- les polypropylène imines comportant deux ou trois groupes amines primaires $-NH_2$,
- les polyamidoamines comportant deux ou trois groupes amines primaires $-NH_2$.

Plus particulièrement, on peut citer :

- l'éthylène diamine (EDA) ayant une alcalinité primaire de 33,28 méq/g :

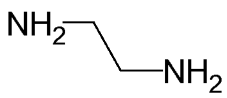

;

- la diéthylènetriamine (DETA) ayant une alcalinité primaire de 19,39 méq/g :

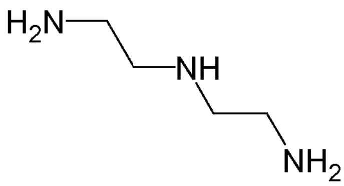

;

- la tris(2-aminoéthyl)amine (TAEA) ayant une alcalinité primaire de 20,52 méq/g :

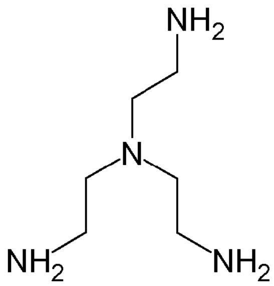

;

- les polyéthylène imines répondant aux formules ci-dessous:

$$H_2N\text{-}(CH_2\text{-}CH_2\text{-}NH)_x\text{-}CH_2\text{-}CH_2\text{-}NH_2$$

$$N[\text{-}(CH_2\text{-}CH_2\text{-}NH)_x\text{-}CH_2\text{-}CH_2\text{-}NH_2]_3$$

dans lesquelles x est un nombre entier tel que l'alcalinité primaire va de 0,4 à 34 méq/g, plus préférentiellement de 3,0 à 34 méq/g ;
- les polypropylène imines répondant aux formules ci-dessous :

$$H_2N\text{-}(CH_2\text{-}CH_2\text{-}CH_2\text{-}NH)_x\text{-}CH_2\text{-}CH_2\text{-}CH_2\text{-}NH_2$$

$$N[\text{-}(CH_2\text{-}CH_2\text{-}CH_2\text{-}NH)_x\text{-}CH_2\text{-}CH_2\text{-}CH_2\text{-}NH_2]_3$$

dans lesquelles x est un nombre entier tel que l'alcalinité primaire est va de 0,4 à 34 méq/g, plus préférentiellement de 3,0 à 34 méq/g ;
- les poly(éthylène-propylène) imines répondant aux formules ci-dessous :

$$H_2N\text{-}(CH_2\text{-}CH_2\text{-}NH)_x\text{-}(CH_2\text{-}CH_2\text{-}CH_2\text{-}NH)_yH$$

$$N[\text{-}(CH_2\text{-}CH_2\text{-}NH)_x\text{-}(CH_2\text{-}CH_2\text{-}CH_2\text{-}NH)_yH]_3$$

dans lesquelles x et y sont des nombres entiers tel que l'alcalinité primaire va de 0,4 à 34 méq/g, plus préférentiellement de 3,0 à 34 méq/g ;

- l'hexaméthylène diamine (HMDA) ayant une alcalinité primaire de 17,11 méq/g

$$NH_2\text{-}CH_2\text{-}CH_2\text{-}CH_2\text{-}CH_2\text{-}CH_2\text{-}CH_2\text{-}NH_2 ;$$

- l'isophorone diamine (IPDA) ayant une alcalinité primaire de 11,73 méq/g

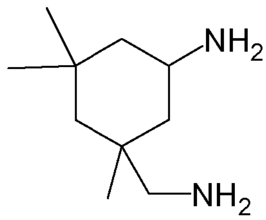

;

- les polyéther diamines possédant une alcalinité primaire allant de 11,4 à 13,5 méq/g et répondant à la formule ci-dessous :

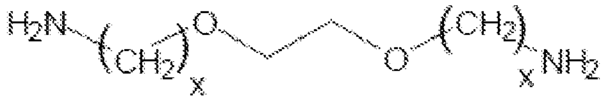

dans laquelle x = 2 ou 3; de telles polyéther diamines sont commercialisées par exemple sous la dénomination JEFFAMINES EDR-148 et EDR-176 par la société HUNTSMAN et présentent des alcalinités primaires respectives de 13,5 et 11,4 méq/g ;

- les polyéther diamines possédant une alcalinité primaire allant de 0,5 à 8,7 méq/g et répondant à la formule ci-dessous :

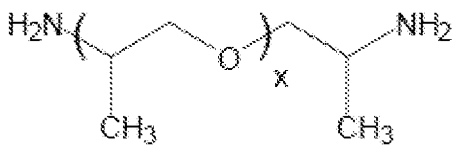

dans laquelle x est un nombre entier allant de 2 ou 68, tel que l'alcalinité primaire va de 0,5 à 8,7 méq/g ; de telles polyéther diamines sont commercialisées par exemple sous la dénomination JEFFAMINES D-230, D-400, D-2000 et D-4000 par la société HUNTSMAN et présentent des alcalinités primaires respectives de 8,7, 5,0, 1,0 et 0,5 méq/g ;

- les polyéther diamines possédant une alcalinité primaire allant de 1,0 à 9,1 méq/g et répondant à la formule ci-dessous :

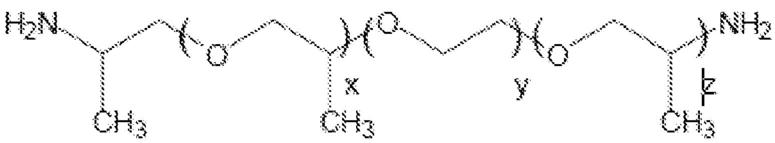

dans laquelle x, y et z sont des nombres entiers, y allant de 2 à 39 et x + z allant de 1 à 6, tel que l'alcalinité primaire va de 1,0 à 9,1 méq/g ; de telles polyéther diamines sont commercialisées par exemple sous la dénomination JEFFAMINES HK-511, ED-600, ED-900et ED-2003 par la société HUNTSMAN et présentent des alcalinités primaires respectives de 9,1, 3,3, 2,2 et 1,0 méq/g ;

- les polyéther triamines possédant une alcalinité primaire allant de 0,6 à 6,8 méq/g et répondant à la formule ci-

dessous :

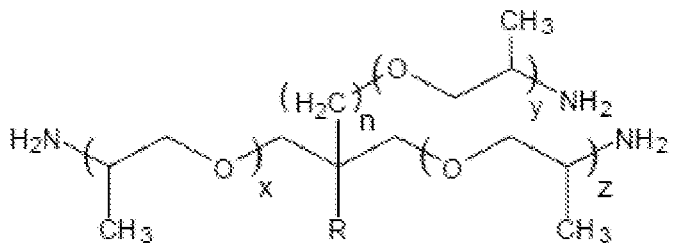

dans laquelle R est un atome d'hydrogène ou un groupe alkyl en C1 à C2, x, y, z et n sont des nombres entiers, n allant de 0 à 1 et x + y + z allant de 5 à 85, tel que l'alcalinité primaire va de 0,6 à 6,8 méq/g ; de telles polyéther diamines sont commercialisées par exemple sous la dénomination JEFFAMINES T-403, T-3000, et T-5000 par la société HUNTSMAN et présentent des alcalinités primaires respectives de 6,8, 1,0 et 0,6 méq/g ;

- les amines grasses dimères et trimères comportant deux ou trois groupes amines primaire d'alcalinité primaire allant de 3,39 méq/g à 3,60 méq/g. Ces amines grasses dimères et trimères peuvent être obtenues à partir d'acides gras dimérisés et trimérisés correspondants. A titre d'exemple de telles amines grasses dimères, on peut citer celles répondant aux formules suivantes :

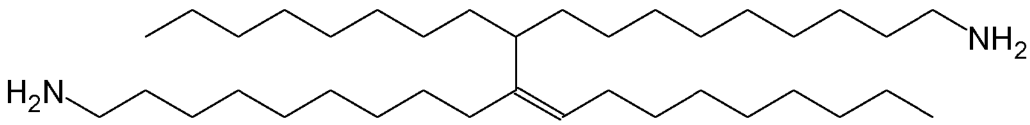

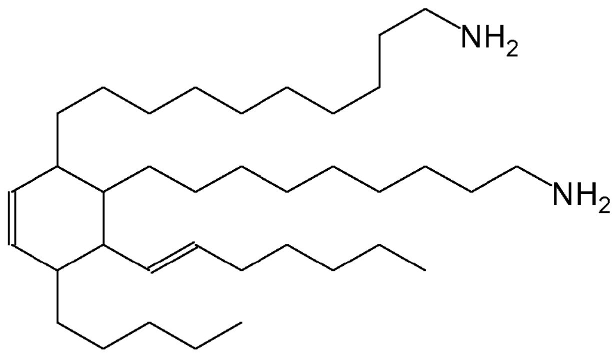

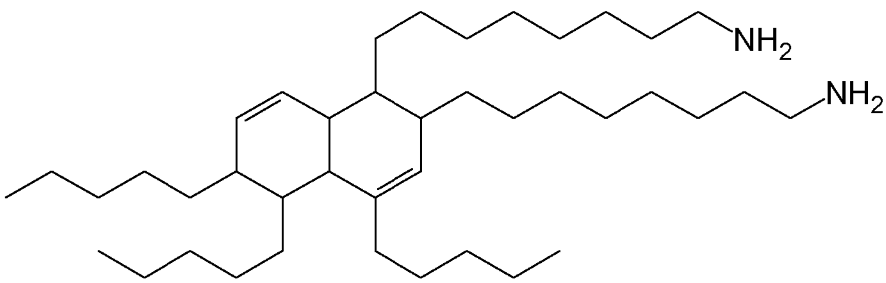

Les acides gras dimères et trimères utilisés pour préparer les amines grasses suscités sont obtenus par polymérisation à haute température et sous pression d'acides gras insaturés monocarboxyliques (acide monomère), comprenant de 6 à 22 atomes de carbone, de préférence de 12 à 20 atomes de carbone, et proviennent de sources végétales ou animales. On peut citer comme exemple de tels acides gras insaturés, les acides en $C_{18}$ ayant une ou deux doubles liaisons (respectivement l'acide oléïque ou linoléïque) obtenus à partir de tallol qui est un sous-produit de la fabrication de la pâte à papier. Après polymérisation de ces acides gras insaturés, on obtient un mélange technique contenant en moyenne 30-35 % en poids d'acides gras monocarboxyliques souvent isomérisés par rapport aux acides gras insaturés monocarboxyliques de départ, 60-65 % en poids d'acides dicarboxyliques (acides dimères) comprenant le double du nombre de carbone par rapport aux acides gras insaturés monocarboxyliques de départ et 5-10 % en poids d'acides tricarboxyliques (acides trimères) ayant le triple du nombre de carbone par rapport aux acides gras insaturés

monocarboxyliques de départ. Par purification de ce mélange, on obtient les différents grades commerciaux d'acides dimères, monomères ou trimères. Ces acides gras dimères et trimères sont ensuite soumis à une réaction d'ammoniation réductrice ($NH_3/H_2$) en présence d'un catalyseur, permettant d'obtenir les amines grasses dimérisées.

Selon un mode de réalisation, le(s) composé(s) (B1) comprennent au moins deux groupes méthylène amine ($-CH_2-NH_2$).

Selon un mode de réalisation préféré, le(s) composé(s) (B1) sont choisis parmi la tris-(2-aminoéthyl)amine (TAEA), l'hexaméthylène diamine (HMDA), les polyéthylène imines, les amines grasses dimères, et leurs mélanges.

Lorsque le système multicomposant selon l'invention comprend au moins deux composés aminés (B1), ceux-ci peuvent être compris dans deux composants différents, par exemple un composant (B) et un composant (C). Les composants (A), (B) et (C) sont alors stockés séparément avant mélange au moment de l'emploi dudit système, à une température de mélange T3, pour former une composition, de préférence adhésive, destinée à être appliquée sur la surface d'un matériau.

Le système multicomposant selon l'invention peut comprendre au moins un catalyseur de réticulation.

Le(s) catalyseur(s) de réticulation peu(ven)t être n'importe quel catalyseur habituellement utilisé(s) pour accélérer la réaction d'ouverture de cycle d'un composé comportant une fonction Tpar une amine primaire et/ou secondaire.

A titre d'exemple de catalyseur de réticulation utilisable selon l'invention, on peut citer :

- les alcoolates, tels que le ter-butylate de potassium ou le méthanolate de sodium ;
- les bases fortes choisis parmi :

  ◦ les phosphazènes tel que le 2-tert-butylimino-2-diéthylamino-1,3-diméthylperhydro-1,3,2-diazaphosphorure (BMEP),

  ◦ les guanidines telles que :

    le 1,5,7-triazabicyclo[4.4.0]dec-5-ene (TBD)

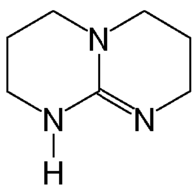

,

    le N-méthyl triazabicyclodécène (Me-TBD)

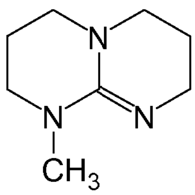

,

  ◦ des amines tertiaires telles que :

    le 1,8-diazabicyclo[5.4.0]undec-7-ène (DBU)

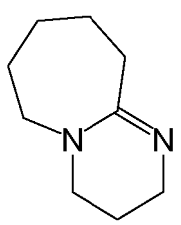

,

    le 1,5-diazabicyclo[4.3.0]non-5-ène (DBN)

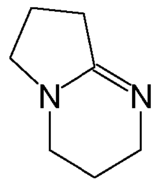

,

l'éther diéthylique-2,2'-morpholine (DMDEE)

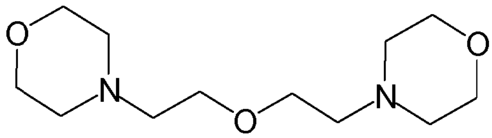

,

le 1,4-diazabicyclo[2.2.2]octane (DABCO)

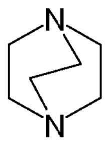

.

Une quantité allant de 0,05 à 1 % en poids de catalyseur(s) de réticulation par rapport au poids total du système multicomposant selon l'invention peut être utilisée.

Le(s) catalyseur(s) de réticulation peu(ven)t être réparti(s) dans un ou plusieurs des composants formant le système multicomposant selon l'invention.

Avantageusement, le système multicomposant selon l'invention peut comprendre au moins une charge minérale.

La (ou les) charge(s) minérale(s) utilisable(s) est (sont) avantageusement choisie(s) de manière à améliorer les performances mécaniques de la composition selon l'invention à l'état réticulée.

A titre d'exemple de charge(s) utilisable(s), on peut citer de manière non limitative le carbonate de calcium, le kaolin, la silice, le gypse, les microsphères et les argiles.

De préférence, la (ou les) charge(s) minérale(s) possède(nt) une taille de particule maximale, notamment un diamètre externe, inférieur(e) à 100 $\mu$m et de préférence inférieur(e) à 10 $\mu$m. De telles charges peuvent être sélectionnées de manière bien connue par l'homme du métier en utilisant des tamis de mailles appropriées.

De préférence, la teneur totale en charge(s) éventuellement présente(s) dans le système multicomposant selon l'invention ne dépasse pas 70% en poids du poids total dudit système.

Le(s) charge(s) peu(ven)t être répartie(s) dans un ou plusieurs des composants formant le système multicomposant selon l'invention.

Le système multicomposant selon l'invention peut inclure moins de 2% en poids d'un ou plusieurs additifs avantageusement choisis de manière appropriée pour ne pas détériorer les propriétés de la composition adhésive selon l'invention, à l'état réticulé. On peut citer par exemples parmi les additifs utilisables des antioxydants ou stabilisants UV (ultra-violet), des pigments, et des colorants. Ces additifs sont de préférence choisis parmi ceux habituellement utilisés dans des compositions adhésives.

Le(s) additif(s) peu(ven)t être répartie(s) dans un ou plusieurs des composants formant le système multicomposant selon l'invention.

De préférence, le système multicomposant susmentionné ne comprend pas de solvant et/ou plastifiant.

Du fait de la faible viscosité du polyuréthane (PP2) selon l'invention, le système multicomposant selon l'invention peut être avantageusement mis en oeuvre directement par mélange de ses différents composants, sans ajout de solvant et/ou de plastifiant, réducteurs de viscosité, dans le composant (A) et/ou sans chauffage dudit composant à des températures au-delà de 95°C.

De préférence, le polyuréthane (PP2) selon l'invention possède une viscosité mesurée à 23°C inférieure ou égale à 600 Pa.s. et une viscosité mesurée à 60°C inférieure ou égale à 40 Pa.s, permettant au système multicomposant selon l'invention d'être avantageusement mis en oeuvre sans ajout de solvant et/ou de plastifiant dans le composant (A) comprenant ledit polyuréthane (PP2), et/ou sans chauffage dudit composant.

Selon un mode de réalisation, le système multicomposant selon l'invention comprend:

- comme premier composant (A), une composition comprenant au moins un polyuréthane (PP2) selon l'invention, et
- comme deuxième composant (B), une composition comprenant au moins un ou deux composé(s) aminé(s) tel(s) que décrit(s) dans l'un des paragraphes précédents (B1), et
ledit système multicomposant étant dépourvu de solvant et/ou de plastifiant.

Le système multicomposant selon l'invention peut être un système bicomposant, c'est-à-dire un système constitué de deux composants (A) et (B), lesdits composants (A) et (B) étant tels que décrits dans l'un des paragraphes précédents.

De préférence, le composant (A) comprend au moins 97% en poids, et plus préférentiellement au moins 98% en poids de polyuréthane(s) à (PP2) selon l'invention par rapport au poids total dudit composant (A).

Selon un mode de réalisation, le système multicomposant est une composition adhésive, de préférence une composition de colle ou de mastic.

L'invention porte également sur l'utilisation d'un polyuréthane à (PP2) selon l'invention, pour la fabrication d'une composition adhésive de préférence sans solvant, notamment sous la forme d'un système multicomposant.

De préférence, la fabrication de la composition adhésive est réalisée sans ajout de composé destiné à abaisser la viscosité de ladite composition, tel qu'un solvant (aqueux, organique), un diluant réactif et/ou un plastifiant.

De préférence, les composants du système multicomposant selon l'invention comprenant le(s) composé(s) (PP2) selon l'invention et le(s) composé(s) aminé(s) (B1) selon l'invention sont mélangés à une température T3 telle que définie précédemment.

De préférence, la composition, de préférence adhésive, selon l'invention est fabriquée par la mise en œuvre du système multicomposant selon l'invention, c'est-à-dire le mélange des différents composants le constituant, à une température de mélange T3.

## D. Utilisations

L'invention a également pour objet un procédé d'assemblage de matériaux mettant en oeuvre le polyuréthane (PP2) selon l'invention, notamment par l'intermédiaire de la mise en œuvre du système multicomposant selon l'invention comprenant les étapes suivantes:

- le mélange d'au moins un (PP2) tel que décrit précédemment et d'au moins un composé aminé (B1) tel que décrit précédemment, puis
- l'enduction dudit mélange sur la surface d'un premier matériau, puis
- le contrecollage de la surface d'un second matériau sur ladite surface enduite, puis
- la réticulation dudit mélange.

L'étape de mélange d'au moins un polyuréthane (PP2) tel que décrit précédemment et d'au moins un composé aminé (B1) tel que décrit précédemment, peut être réalisée notamment par la mise en œuvre du système multicomposant selon l'invention, à savoir par mélange des composants comprenant respectivement le(s) polyuréthane(s) à (PP2) (composant (A)) et le(s) composé(s) aminé(s) (composant (B)), tel que définis précédemment.

Cette étape de mélange peut être réalisée à température ambiante ou à chaud, avant enduction.

De préférence, le mélange est réalisé à une température inférieure à la température de dégradation des ingrédients compris dans l'un ou l'autre des composants (A) et (B). En particulier, le mélange est réalisé à une température T3 inférieure à 95°C, de préférence allant de 15 à 80°C, afin d'éviter avantageusement toute dégradation thermique.

De préférence, on mélange le(s) polyuréthane(s) (PP2) et le(s) composé(s) aminé(s) (B1) dans des quantités telles que le rapport molaire r3 du nombre de fonctions T sur le nombre de groupes amine présents dans le mélange va de 0,5 à 1, et plus préférentiellement de 0,8 à 1.

Dans chacune de ces variantes, l'enduction dudit mélange peut être réalisée sur tout ou partie de la surface d'un matériau. En particulier, l'enduction dudit mélange peut être réalisé sous la forme d'une couche d'épaisseur allant de 0,002 à 5 mm.

Eventuellement, la réticulation dudit mélange sur la surface du matériau peut-être accélérée en chauffant le(s) matériau(x) enduit(s) à une température inférieure ou égale à 120°C. Le temps requis pour compléter cette réaction de réticulation et assurer ainsi le niveau de cohésion requis est en général de l'ordre de 0,5 à 24 heures.

L'enduction et le contrecollage du second matériau sont généralement effectués dans un intervalle de temps compatible avec le procédé d'enduction, comme il est bien connu de l'homme du métier, c'est-à-dire avant que la couche d'adhésif perde sa capacité à fixer par collage les deux matériaux.

Les matériaux appropriés sont, par exemple, des substrats inorganiques tels que le verre, les céramiques, le béton, les métaux ou les alliages (comme les alliages d'aluminium, l'acier, les métaux non-ferreux et les métaux galvanisés) ainsi que les métaux et les composites éventuellement revêtus de peinture (comme dans le domaine automobile);

ou bien des substrats organiques comme le bois, des plastiques tel que le PVC, le polycarbonate, le PMMA, les résines époxy et les polyesters.

Les performances mécaniques et le pouvoir adhésif des compositions selon l'invention peuvent être mesurés conformément aux tests décrits dans les exemples qui suivent, à savoir une fois réticulées. Les compositions selon l'invention sont avantageusement adaptées à un large panel d'applications telles que l'agroalimentaire, la cosmétique, l'hygiène, le transport, l'habitat, les textiles, l'emballage.

Il a été observé que le polyuréthane (PP2) selon l'invention présente avantageusement une réactivité améliorée vis-à-vis des composés aminés comprenant au moins deux groupes amine primaire et/ou secondaire à une température proche de l'ambiante (allant par exemple de 15°C à 35°C).

Il a été observé par ailleurs qu'en utilisant le polyuréthane (PP2) selon l'invention, on pouvait avantageusement fabriquer des compositions adhésives, de préférence sans solvant, présentant de bonnes propriétés de mouillabilité et de bonnes performances mécaniques, adaptées au revêtement de surface, et/ou des propriétés adhésives satisfaisantes pour l'assemblage par collage d'au moins deux matériaux.

Tous les modes de réalisation décrits ci-dessus peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

Les exemples suivants sont donnés à titre purement illustratif de l'invention et ne sauraient être interprétés pour en limiter la portée.

**PARTIE EXPERIMENTALE**

A - Synthèse du polyuréthane (PP2) (composant A)

Les composants (A) des exemples 1 à 3 selon l'invention sont préparés à l'aide des réactifs indiqués dans le tableau 1 et selon le mode opératoire décrit dans les pages suivantes. Les quantités indiquées dans le tableau 1 sont exprimées en gramme de produits commerciaux.

**Tableau 1**

| Ingrédients | 1 | 2 | 3 |
|---|---|---|---|
| Dérivé d'allophanate d'hexaméthylène diisocyanate (HDI) de formule (IIA) | 71,3 | 70,4 | 34,6 |
| PPG diol | - | - | 58,4 |
| Catalyseur de réaction | 0,1 | 0,1 | 0,1 |
| Rapport NCO/OH, r1 | N.A. | N.A. | 1,89 |
| 4-hydroxyméthyl-5-méthyl-1,3-dioxolen-2-one | 28,6 | 29.5 | 6,9 |
| Rapport molaire NCO/OH, r2 | 0,97 | 0,93 | 0,91 |
| N.A. : non applicable | | | |

Dans le tableau 1, on utilise comme :

- dérivé d'allophanate d'hexaméthylène diisocyanate (HDI) de formule (IIA), le produit commercial vendu sous la dénomination TOLONATE® X FLO par la société VENCOREX, correspondant à une composition à 99,5% en poids minimum de dérivé d'allophanate d'hexaméthylène diisocyanate (HDI) de formule (IIA) et moins de 0,5% en poids de HDI, ayant une teneur en groupe NCO égale à 13,4 % en poids par rapport au poids de TOLONATE® X FLO,
- PPG diol, le produit commercial vendu sous la dénomination VORANOL® P2000, par la société DOW, correspondant à du polypropylène glycol diol ayant un indice d'hydroxyle environ égal à 56 mg KOH/g de PPG diol,
- catalyseur de réaction, le produit commercial vendu sous la dénomination BORCHI KAT® 315 par la société OM Group, correspondant à un catalyseur de réaction de néodécanoate de bismuth,
- 4-hydroxyméthyl-5-méthyl-1,3-dioxolen-2-one (numéro CAS : 91526-18-0), synthétisé selon WO 96/02253 ayant un indice d'hydroxyle environ égal à 431 mg KOH/g.

Les rapports molaires r1 et r2 sont calculés de manière bien connue de l'homme du métier à partir des quantités molaires en réactifs utilisés. En exprimant le nombre de mole(s) de dérivé de formule (IIA) utilisé en fonction de la teneur en groupes NCO (%NCO) de ce dernier et de la masse molaire de NCO égale à 42g/mol; le nombre de mole(s) polyéther

polyol utilisé en fonction de l'indice hydroxyle (mg KOH/g) de ce dernier et de la masse molaire de KOH égale à 56g/mol ; le nombre de mole(s) de 4-hydroxyméthyl-5-méthyl-1,3-dioxolen-2-one utilisé en fonction de l'indice hydroxyle (mg KOH/g) de ce dernier et de la masse molaire de KOH égale à 56 g/mol, on peut écrire :

$$r1 = \frac{\%NCO\ (\text{dérivé de formule (II)}) \times m1\ (\text{dérivé de formule (II)}) \times 10 \times 56}{42 \times IOH\ (\text{polyéther polyol}) \times m2\ (\text{polyéther polyol})}$$

et

$$r2 = \frac{\frac{[\%NCO\ (\text{dérivé de formule (I)}) \times m1\ (\text{dérivé de formule (I)}) \times 10]}{42} - \frac{[\ IOH\ (\text{polyéther polyol}) \times m2\ (\text{polyéther polyol})]}{56}}{IOH\ (4\text{-hydroxymethyl-5-methyl-1,3-dioxolen-2-one}) \times m3\ (4\text{-hydroxymethyl-5-methyl-1,3-dioxolen-2-one})} \times 56$$

où :

%NCO (dérivé de formule (II)) correspond à la teneur en groupes NCO du Tolonate® X FLO, m1 (dérivé de formule (II)) correspond à la masse de Tolonate® X FLO introduit,
IOH (polyéther polyol) correspond à l'indice hydroxyle du Voranol® P2000,
m2 (polyéther polyol) correspond à la masse de Voranol® P2000 introduit,
IOH (4-hydroxyméthyl-5-méthyl-1,3-dioxolen-2-one) correspond à l'indice d'hydroxyle du 4-hydroxyméthyl-5-methyl-1,3-dioxolen-2-one
m3 (4-hydroxyméthyl-5-méthyl-1,3-dioxolen-2-one) correspond à la masse de 4-hydroxyméthyl-5-méthyl-1,3-dioxolen-2-one.

**Exemples 1 et 2:** Synthèse du polyuréthane (PP2) (composant A) en une étape (E2):

Dans un réacteur placé sous atmosphère d'azote, on chauffe le diisocyanate à 50°C puis on introduit le 4-hydroxyméthyl-5-méthyl-1,3-dioxolen-2-one dans les proportions indiquées dans le tableau 1. Le mélange est ensuite porté à 80°C et le catalyseur est ajouté. Ce mélange est maintenu sous agitation constante à 80°C, sous azote, jusqu'à disparition complète des fonctions NCO visibles en Infra-Rouge (IR) (environ 2250 $cm^{-1}$).

On obtient 100 g de polyuréthane (PP2) (composant A) en fin de réaction pour chacun des exemples.

**Exemple 3 :** Synthèse du polyuréthane (PP2) (composant A) en deux étapes (E1 et E2):

Etape E1 : Synthèse du composé (PP1)

Dans un réacteur placé sous atmosphère d'azote, on chauffe le diisocyanate à 50°C puis on introduit sous agitation constante au goutte à goutte un mélange de polyéther polyol et de catalyseur de réaction, conformément aux quantités indiquées dans le tableau 1. La température ne dépasse pas 80°C.

Ce mélange est maintenu sous agitation constante à 80°C, sous azote, jusqu'à réaction complète des fonctions NCO du diisocyanate.

Le suivi de la réaction est réalisé en mesurant l'évolution de la teneur en groupes NCO dans le mélange, par exemple par un dosage de dibutylamine en retour, à l'aide d'acide chlorhydrique selon la norme NF T52-132. La réaction est stoppée lorsque le « taux de NCO » (%NCO) mesuré est environ égal au taux de NCO souhaité (2,2% en poids du poids du mélange réactionnel).

Etape E2 : Synthèse du polyuréthane (PP2) (composant A)

Une fois la réaction de l'étape E1 terminée, on introduit dans le réacteur le 4-hydroxyméthyl-5-méthyl-1,3-dioxolen-2-one dans les proportions indiquées dans le tableau 1, sous agitation et sous azote. La température ne dépasse pas 80°C.

Le mélange composé (PP1) - 4-hydroxyméthyl-5-méthyl-1,3-dioxolen-2-one est maintenu sous agitation constante à 80°C, sous azote, jusqu'à disparition complète des fonctions NCO visibles en Infra-Rouge (IR) (environ 2250 $cm^{-1}$).

On obtient 100 g de polyuréthane (PP2) (composant A) en fin de réaction.

Mesure de viscosité :

La viscosité du composant (A) obtenu est mesurée 24 heures après la fin de réaction (J+1) à 23°C et 60°C et exprimée en Pascal seconde (Pa.s). L'ensemble des valeurs mesurées pour les exemples 1 à 3 sont regroupés dans le tableau 2 suivant.

La mesure de viscosité à 23°C se fait à l'aide d'un viscosimètre Brookfield RVT, avec une aiguille adaptée au domaine de viscosité et à une vitesse de rotation de 20 tours par minute (tr/mn).

La mesure de viscosité à 60°C se fait à l'aide d'un viscosimètre Brookfield RVT couplé avec un module chauffant de type Thermosel de la marque Brookfield, avec un mobile adapté au domaine de viscosité et à une vitesse de rotation de 20 tours par minute.

**Tableau 2**

| Caractérisation du polyuréthane (PP2) | 1 | 2 | 3 |
|---|---|---|---|
| Viscosité à J+1 à 23°C (Pa.s.) | 300 | 310 | 120 |
| Viscosité à J+1 à 60°C (Pa.s.) | 3,6 | 3,5 | 3,6 |
| Teneur calculée en fonctions T dans le polyuréthane (PP2) (méq/g de polyuréthane (PP2)), notée $t_{cc}$ (PP2) | 2,20 | 2,27 | 0,53 |

La teneur en fonctions T dans le polyuréthane (PP2) (notée $t_{cc}$ (PP2)) (exprimée en méq/g de polyuréthane (PP2)) est calculée de manière bien connue de l'homme du métier à partir de la quantité molaire de 4-hydroxyméthyl-5-méthyl-1,3-dioxolen-2-one utilisé. En exprimant le nombre de mole(s) de 4-hydroxyméthyl-5-méthyl-1,3-dioxolen-2-one utilisé en fonction de l'indice hydroxyle (mg KOH/g) de ce dernier et de la masse molaire de KOH égale à 56g/mol, on peut écrire :

$$t_{cc}\ (PP2) = \frac{IOH\ (4-hydroxymethyl-5-methyl-1,3-dioxolen-2-one)\ x\ m3\ (4-hydroxymethyl-5-methyl-1,3-dioxolen-2-one)}{56\ x\ m\ (PP2)}$$

où :

IOH (4-hydroxyméthyl-5-méthyl-1,3-dioxolen-2-one) correspond à l'indice d'hydroxyle du 4-hydroxyméthyl-5-méthyl-1,3-dioxolen-2-one,

m3 (4-hydroxméthyl-5-méthyl-1,3-dioxolen-2-one) correspond à la masse de 4-hydroxyméthyl-5-méthyl-1,3-dioxolen-2-one introduit,

m (PP2) correspond à la masse de polyuréthane (PP2), soit à la masse totale des ingrédients utilisés pour la synthèse du polyuréthane PP2 (dérivé de formule (IIA), PPG diol, catalyseur de réaction).

B - Préparation des compositions selon l'invention par mélange des composants A et B

Les compositions adhésives 1' à 12' selon l'invention sont préparées par mélangeage des différents ingrédients indiqués dans le tableau 3 suivant, à une température T3 telle qu'indiquée ci-après, sous atmosphère azote. Le mélange est maintenu sous agitation constante pendant 2 minutes sous vide (pour débullage). Puis, on laisse agiter le mélange jusqu'à disparition complète des fonctions T visibles en Infra-Rouge (signal à 1800 $cm^{-1}$)

Les quantités indiquées dans le tableau 3 sont exprimées en grammes.

**Tableau 3**

| | 1' | 2' | 3' | 4' | 5' | 6' | 7' | 8' | 9' | 10' |
|---|---|---|---|---|---|---|---|---|---|---|
| Composant A de l'exemple 1 | 100 | 100 | 100 | 100 | 100 | 100 | 100 | - | - | - |
| Composant A de l'exemple 2 | - | - | - | - | - | - | - | 100 | 100 | - |
| Composant A de l'exemple 3 | - | - | - | - | - | - | - | - | - | 100 |
| TAEA | 11,2 | 11,2 | 11,2 | 11,2 | 5,5 | 5,5 | 5,5 | - | - | 2,7 |
| HMDA | - | - | - | - | - | 11,2 | - | - | - | - |

(suite)

| | 1' | 2' | 3' | 4' | 5' | 6' | 7' | 8' | 9' | 10' |
|---|---|---|---|---|---|---|---|---|---|---|
| PEI | - | - | - | - | - | - | - | 32,2 | 32,2 | - |
| Amine grasse dimère | - | - | - | - | 32,1 | - | 32,1 | - | - | - |
| Carbonate de calcium | - | - | 50 | 100 | 100 | - | - | 100 | 50 | 100 |
| Rapport molaire r3 | 0,96 | 0,96 | 0,96 | 0,96 | 0,96 | 0,73 | 0,96 | 0,93 | 0,93 | 0,97 |
| Température T3 (°C) | 23 | 80 | 80 | 80 | 80 | 80 | 80 | 80 | 80 | 80 |

Dans le tableau 3, on utilise :

- la tris(2-aminoéthyl)amine (TAEA) d'alcalinité primaire = 20,52 méq/g de TAEA,
- l'hexaméthylène diamine (HMDA) d'alcalinité primaire = 17,21 méq/g de HMDA,
- la polyéthylène imine (PEI) commercialisée sous le nom E100 par la société HUNTSMAN, d'alcalinité primaire = 7,58 méq/g de PEI,
- l'amine grasse dimère commercialisée sous le nom PRIAMINE® 1071 par la société CRODA, d'alcalinité primaire = 3,65 méq/g de Priamine,
- le carbonate de calcium de taille de particule maximale = 100 $\mu$m.

Le rapport molaire r3 est calculé de manière bien connue par l'homme du métier à partir des quantités molaires en 4-hydroxyméthyl-5-méthyl-1,3-dioxolen-2-one et en composé(s) possédant au moins deux groupes amines primaires ($-NH_2$). En exprimant le nombre de mole(s) de 4-hydroxyméthyl-5-méthyl-1,3-dioxolen-2-one en fonction de la teneur en fonctions T dans le polyuréthane (PP2) précédemment calculée ; et le nombre de mole(s) de composé(s) aminé(s) utilisé(s) en fonction de l'alcalinité primaire (méq/g) de ce(s) dernier(s), on peut écrire :

$$r3 = \frac{t_{cc}\ (\mathrm{PP2})\ x\ m\ (\mathrm{PP2})}{\sum_k [m_k\ (\text{durcisseur aminé}) x\ AP_k\ (\text{durciseur aminé})]}$$

où :

$t_{cc}$ est la teneur calculée en fonction T dans le polyuréthane (PP2) (méq/g) comme définie précédemment,
m (PP2) correspond à la masse de polyuréthane (PP2) comme définie précédemment,
APk est l'alcalinité primaire de chaque composé aminé,
mk (composé aminé) correspond à la masse de chaque composé aminé k d'alcalinité APk utilisé,
$\sum_k [m_k$ (composé aminé)x$AP_k$ (composé aminé)] correspond pour k=1 au produit de la masse du composé aminé utilisé par l'alcalinité primaire dudit composé aminé, et pour k>1 à la somme des produits de la masse de chaque composé aminé utilisé par leur alcalinité primaire respective.
k est un nombre entier supérieur ou égal à 1.

Mesure des performances mécaniques : résistance et allongement à la rupture des compositions selon l'invention à l'état réticulé.

Une fois réticulée, on mesure la résistance et de l'allongement à la rupture par essai de traction de la composition adhésive selon le protocole décrit ci-après.

Le principe de la mesure consiste à étirer dans une machine de traction, dont la mâchoire mobile se déplace à une vitesse constante égale à 100 mm/minute, une éprouvette standard constituée de la composition adhésive réticulée ; et à enregistrer, au moment où se produit la rupture de l'éprouvette, la contrainte de traction appliquée (en MPa) ainsi que l'allongement de l'éprouvette (en %).

L'éprouvette standard est en forme d'haltère, comme illustré dans la norme internationale ISO 37. La partie étroite de l'haltère utilisée a pour longueur 20 mm, pour largeur 4 mm et pour épaisseur 500 $\mu$m.

Pour préparer l'haltère, on chauffe à 95°C la composition conditionnée comme décrit précédemment, puis on extrude sur une feuille A4 de papier siliconé la quantité nécessaire pour former sur celle-ci un film ayant une épaisseur de 500 $\mu$m qui est laissé durant 7 jours à 23°C et 50% d'humidité relative pour réticulation. L'haltère est alors obtenue par simple découpe dans le film réticulé à l'aide d'un emporte-pièce.

Le test de résistance à la traction est répété deux fois et donne les mêmes résultats. La contrainte à la traction

appliquée enregistrée est exprimée en Mégapascal (MPa, soit $10^6$ Pa) et l'allongement à la rupture en % par rapport à la longueur initiale de l'éprouvette. Les valeurs sont regroupées dans le tableau 4 ci-dessous.

**Tableau 4**

| | 1' | 2' | 3' | 4' | 5' | 6' | 7' | 8' | 9' | 10' |
|---|---|---|---|---|---|---|---|---|---|---|
| Contrainte de traction appliquée (MPa) | 2,4 | 2,7 | 5,4 | 7,0 | 4,1 | 1,7 | 1,4 | 4,6 | 3,6 | 4,9 |
| Allongement à la rupture (%) | 360 | 440 | 370 | 200 | 590 | 690 | 420 | 445 | 620 | 500 |

Pouvoir adhésif : Mesure de la force de cisaillement sous contrainte (en anglais Lap Shear)

Les compositions 1', 2' et 8' selon l'invention ont été soumises par ailleurs à des tests de collage de deux lamelles en aluminium poudré (chacune de taille 100 mm x 25 mm) préalablement nettoyées avec un solvant (isopropanol). On applique la composition adhésive sur une des surfaces des lamelles à l'aide d'une spatule, dans un espace délimité par une fenêtre de 12,5 mm x 25 mm en téflon. On appose par-dessus la surface enduite de colle l'autre lamelle, en pressant les deux lamelles l'une contre l'autre. Après réticulation de sept jours à 23°C et 50% d'humidité relative, on mesure la force de cisaillement à la rupture ainsi que le faciès de rupture.

**Tableau 5**

| | 1' | 2' | 6' |
|---|---|---|---|
| Force de cisaillement à la rupture (MPa) | 5,2 | 7 | 2,5 |
| Type de rupture | RC | RC | RC |

On note « RC» pour rupture cohésive, signifiant que l'on observe que le joint adhésif est resté collé sur les deux faces des lamelles contrecollées.

Ainsi, les compositions adhésives selon l'invention, peuvent être formulées aisément, à l'aide d'un procédé de préparation peu coûteux en énergie et respectueux de l'homme et de son environnement, ne mettant pas en œuvre de solvant ni de plastifiant.

En outre, les compositions adhésives selon l'invention ainsi obtenues conduisent à des adhésifs performants en termes de propriétés mécaniques et/ou de force d'adhésion, adaptés à un large panel d'applications.

## Revendications

1. Polyuréthane (PP2) comprenant :

   - au moins deux, de préférence deux ou trois, fonctions terminales T de formule (I) suivante :

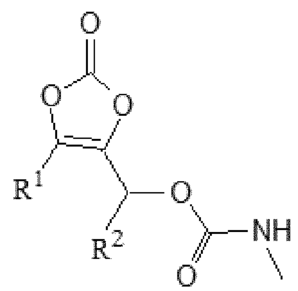

(I)

dans laquelle $R^1$ et $R^2$, identiques ou différents, représentent chacun un atome d'hydrogène, un groupe alkyle linéaire ou ramifié de préférence en C1-C6, un groupe cycloalkyle de préférence en C5-C6, un groupe phényle de préférence en C6-C12, ou un groupe alkylphényle avec une chaîne alkyle, linéaire ou ramifiée, de préférence en C1-C4 ; ou $R^1$ et $R^2$ peuvent être liés ensemble pour former un groupement $-(CH_2)_n-$ avec n = 3, 4 ou 5,

et

- au moins un motif divalent de formule (II) suivante:

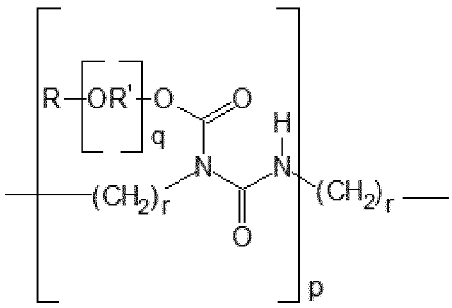

(II)

dans laquelle :

- p est un nombre entier allant de 1 à 2 ;
- q est un nombre entier allant de 0 à 9 ;
- r est un nombre entier valant 5 ou 6 ;
- R représente une chaîne hydrocarbonée, saturée ou insaturée, cyclique ou acyclique, linéaire ou ramifiée, comprenant de 1 à 20 atomes de carbone ; et
- R' représente un groupe divalent hydrocarboné, linéaire ou ramifié, saturé, ayant de 2 à 4 atomes de carbone.

**2.** Polyuréthane selon la revendication 1, comprenant en outre au moins l'un des radicaux divalents $R^3$ suivants :

a) le radical divalent $-(CH_2)_5-$ dérivé du pentaméthylène diisocyanate (PDI) ;
b) le radical divalent $-(CH_2)_6-$ dérivé de l'hexaméthylène diisocyanate (HDI) ;
c) le radical divalent dérivé de l'isophorone :

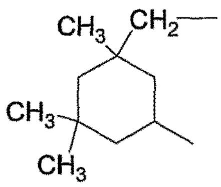

d) le radical divalent dérivé TDI ;
e) le radical divalent dérivé du MDI ;
f) le radical divalent dérivé du xylylène diisocyanate (XDI) ;
g) le radical divalent dérivé du 1,3-bis(isocyanatométhyl)cyclohexane (m-H6XDI) :

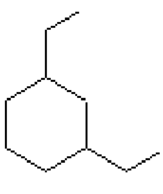

h) le radical divalent dérivé du 4,4'-Méthylene dicyclohexyl diisocyanate (H12MDI) :

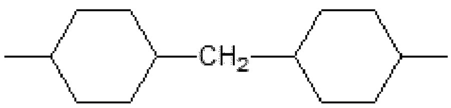

**3.** Polyuréthane selon l'une quelconque des revendications 1 ou 2, ayant la formule (III) suivante :

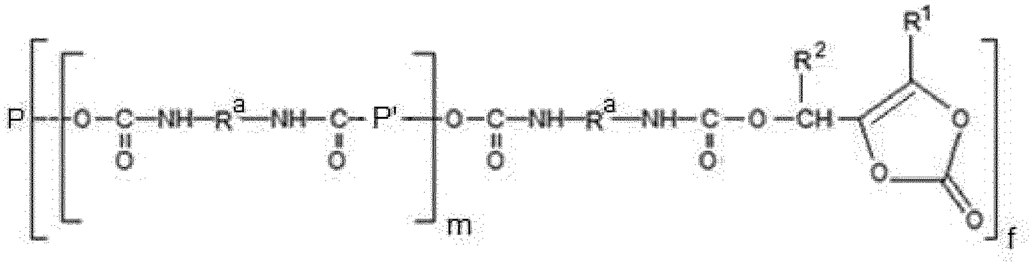

(III)

dans laquelle :

- $R^1$ et $R^2$ sont tels que définis dans la revendication 1, $R^1$ étant de préférence un méthyle et $R^2$ étant de préférence un atome d'hydrogène ;
- P représente l'une des deux formules ci-dessous :

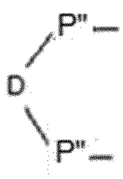

ou

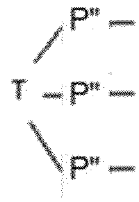

dans lesquelles D et T représentent, indépendamment l'un de l'autre, un radical hydrocarboné comprenant de 2 à 66 atomes de carbone, linéaire ou ramifié, cyclique, alicyclique ou aromatique, saturé ou insaturé, comprenant éventuellement un ou plusieurs hétéroatomes ;

- P' et P" étant, indépendamment l'un de l'autre, un radical divalent issu d'un polyol de préférence choisi parmi les polyéther polyols, les polycarbonate polyols, les polyerster polyols, les polydiène polyols, et leurs mélanges;
- m et f sont des nombres entiers tel que la masse moléculaire moyenne du polyuréthane va de 600 à 100 000 g/mol ;
- f est égal à 2 ou 3 ;
- $R^a$ représente un radical divalent choisi parmi les radicaux $R^3$ tels que définis dans la revendication 2, et le motif divalent de formule (II) telle que définie dans la revendication 1, au moins un $R^a$ étant un motif divalent de formule (II).

4. Polyuréthane selon l'une quelconque des revendications 1 à 3, **caractérisé en ce qu'**il peut être obtenu par réaction d'un composé (PP1) comprenant au moins deux groupes NCO et au moins un motif divalent de formule (II) tel que défini dans la revendication 1, avec au moins un composé de formule (IV) suivante :

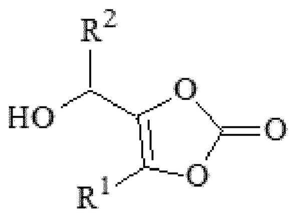

(IV)

dans laquelle dans laquelle $R^1$ et $R^2$ sont tels que définis dans la revendication 1, de préférence $R^1$ est un méthyle et $R^2$ est un hydrogène.

5. Procédé de préparation d'un polyuréthane (PP2) tel que défini selon l'une quelconque des revendications 1 à 4, comprenant une étape de réaction de polyaddition (notée E2) :

- d'au moins un composé (PP1) possédant au moins deux groupes NCO et au moins un motif divalent de formule (II) :

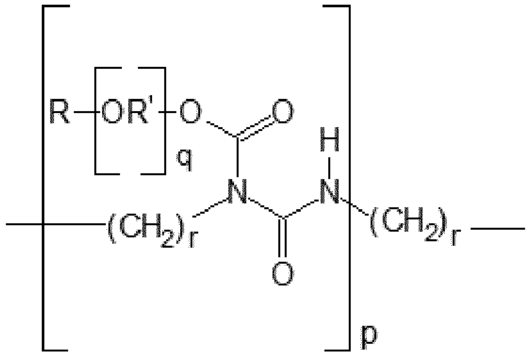

(II)

dans laquelle :

- p est un nombre entier allant de 1 à 2 ;
- q est un nombre entier allant de 0 à 9 ;
- r est un nombre entier égal à 5 ou 6 ;
- R représente une chaîne hydrocarbonée, saturée ou insaturée, cyclique ou acyclique, linéaire ou ramifiée, comprenant de 1 à 20 atomes de carbone ;
- R' représente un groupe divalent hydrocarboné, linéaire ou ramifié, saturé, ayant de 2 à 4 atomes de carbone ;

- avec au moins un composé de formule (IV) tel que défini dans la revendication 4, dans des quantités de composé(s) (PP1) et de composé(s) de formule (IV) conduisant à un rapport molaire NCO/OH, noté $r_2$, inférieur ou égal à 1, de préférence allant de 0,8 à 1, et préférentiellement de 0,85 à 1,0.

**6.** Procédé selon la revendication 5, dans lequel le(s) composé(s) (PP1) est (sont) choisi(s) parmi les dérivés d'allophanate d'hexaméthylène diisocyanate (HDI) de formule (IIA) suivante :

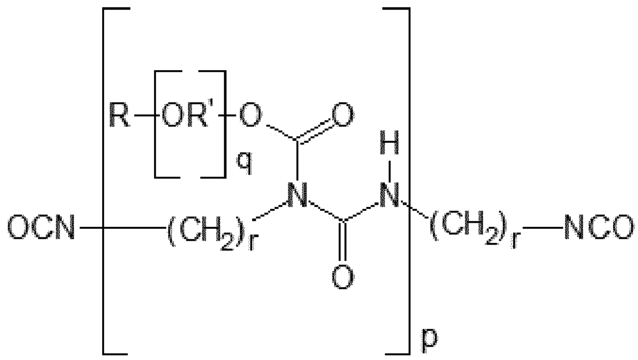

(IIA)

dans laquelle :

- p est un nombre entier allant de 1 à 2 ;
- q est un nombre entier allant de 0 à 9 ;
- r est un nombre entier égal à 5 ou 6 ;
- R représente une chaîne hydrocarbonée, saturée ou insaturée, cyclique ou acyclique, linéaire ou ramifiée, comprenant de 1 à 20 atomes de carbone ;
- R' représente un groupe divalent hydrocarboné, linéaire ou ramifié, saturé, ayant de 2 à 4 atomes de carbone.

**7.** Procédé selon la revendication 5, dans lequel le(s) composé(s) (PP1) est (sont) choisi(s) parmi les polyuréthanes à terminaisons NCO susceptible(s) d'être obtenu(s) par une réaction de polyaddition (notée étape E1):

(i) d'une composition de polyisocyanate(s), et en particulier de diisocyanates, comprenant au moins un dérivé d'allophanate d'hexaméthylène diisocyanate (HDI) de formule (IIA) telle que définie dans la revendication 6, et (ii) avec une composition de polyol(s), ledit(lesdits) polyol(s) étant de préférence choisi(s) parmi les polyéther polyols, les polyester polyols, les polydiène polyols, les polycarbonate polyols, et leurs mélanges, et préférentiellement parmi les polyéther polyols,
dans des quantités de polyisocyanate(s) et de polyol(s) conduisant à un rapport molaire NCO/OH, noté r1, strictement supérieur à 1, et de préférence allant de 1,6 à 1,9.

**8.** Procédé selon l'une quelconque des revendications 5 à 7, **caractérisé en ce qu'**il ne comprend pas d'étape consistant à ajouter un ou plusieurs solvant(s) et/ou plastifiant(s).

**9.** Procédé de préparation selon la revendication 7, **caractérisé en ce que** le(s) polyol(s) est (sont) choisi(s) parmi les polyoxyalkylène polyols, dont la partie alkylène, linéaire ou ramifiée, comprend de 1 à 4 atomes de carbone.

**10.** Système multicomposant, de préférence sans solvant, comprenant :

- comme premier composant (composant A), une composition comprenant au moins un polyuréthane (PP2) tel que défini selon l'une quelconque des revendications 1 à 4, et
- comme deuxième composant (composant B), une composition comprenant au moins un composé aminé (B1) comprenant au moins deux groupes amine choisis parmi les groupes amine primaire, les groupes amine secondaire et leurs mélanges, de préférence comprenant au moins deux groupes amine primaire.

**11.** Système multicomposant selon la revendication 10, **caractérisé en ce que** le(s) composé(s) aminé(s) (B1) comprennent au moins deux groupes méthylène amine ($-CH_2-NH_2$).

**12.** Système multicomposant selon l'une quelconque des revendications 10 ou 11, **caractérisé en ce que** le(s) composé(s) aminé(s) (B1) sont choisis parmi la tris-(2-aminoéthyl)amine (TAEA), l'hexaméthylène diamine (HMDA), les polyéthylène imines, les amines grasses dimères, et leurs mélanges.

**13.** Système multicomposant selon l'une quelconque des revendications 10 à 12, **caractérisé en ce que** les quantités de polyuréthane(s) (PP2) et de composé(s) aminé(s) (B1) présents dans le système multicomposant conduisent à un rapport molaire du nombre de fonctions T de formule (I) sur le nombre de groupes amine primaire et/ou secondaire noté $r_3$, allant de 0,5 à 1.

**14.** Procédé d'assemblage de matériaux mettant en œuvre le polyuréthane (PP2) tel que défini à l'une quelconque des revendications 1 à 4, comprenant les étapes suivantes :

- le mélange d'au moins un polyuréthane (PP2) tel que défini à l'une quelconque des revendications 1 à 4, et d'au moins un composé aminé (B1) comprenant au moins deux groupes amine choisis parmi les groupes amine primaire, les groupes amine secondaire et leurs mélanges, de préférence comprenant au moins deux groupes amine primaire ;
- l'enduction dudit mélange sur la surface d'un premier matériau, puis
- le contrecollage de la surface d'un second matériau sur ladite surface enduite, puis
- la réticulation dudit mélange.

**15.** Utilisation d'un polyuréthane comprenant au moins deux fonctions terminales T de formule (I) (PP2) tel que défini selon l'une quelconque des revendications 1 à 4, pour la fabrication d'une composition adhésive.

## Patentansprüche

**1.** Polyurethan (PP2), umfassend:

- mindestens zwei, vorzugsweise zwei oder drei, endständige Funktionen T der folgenden Formel (I) :

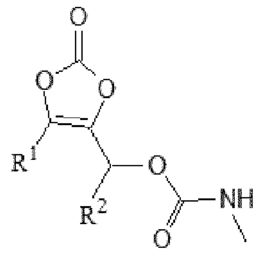

(I)

in der $R^1$ und $R^2$, die gleich oder verschieden sind, jeweils für ein Wasserstoffatom, eine lineare oder verzweigte Alkylgruppe, vorzugsweise eine C1-C6-Alkylgruppe, eine Cycloalkylgruppe, vorzugsweise eine C5-C6-Cycloalkylgruppe, eine Phenylgruppe, vorzugsweise eine C6-C12-Phenylgruppe, oder eine Alkylphenylgruppe mit einer linearen oder verzweigten Alkylkette, vorzugsweise eine C1-C4-Alkylkette, stehen oder $R^1$ und $R^2$ miteinander zu einer Gruppe - $(CH_2)_n$- mit n = 3, 4 oder 5 verknüpft sein können,
und
- mindestens eine zweiwertige Einheit der folgenden Formel (II):

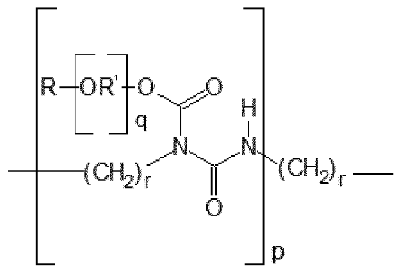

(II)

in der:

- p eine ganze Zahl im Bereich von 1 bis 2 ist;
- q eine ganze Zahl im Bereich von 0 bis 9 ist;
- r eine ganze Zahl mit einem Wert von 5 oder 6 ist;
- R für eine gesättigte oder ungesättigte, cyclische oder acyclische, lineare oder verzweigte Kohlenwasserstoffkette mit 1 bis 20 Kohlenstoffatomen steht; und
- R' für eine lineare oder verzweigte, gesättigte zweiwertige Kohlenwasserstoffgruppe mit 2 bis 4 Kohlenstoffatomen steht.

**2.** Polyurethan nach Anspruch 1, das ferner mindestens einen der folgenden zweiwertigen Reste $R^3$ umfasst:

a) den zweiwertigen Rest -$(CH_2)_5$-, der sich von Pentamethylendiisocyanat (PDI) ableitet;
b) den zweiwertigen Rest -$(CH_2)_6$-, der sich von Hexamethylendiisocyanat (HDI) ableitet;
c) den zweiwertigen Rest, der sich von Isophoron ableitet:

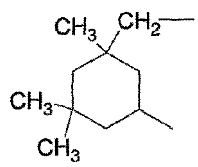

d) den zweiwertigen Rest, der sich von TDI ableitet;
e) den zweiwertigen Rest, der sich von MDI ableitet;
f) den zweiwertigen Rest, der sich von Xylylendiisocyanat (XDI) ableitet;
g) den zweiwertigen Rest, der sich von 1,3-Bis-isocyanatomethy)cyclohexan (m-H6XDI) ableitet:

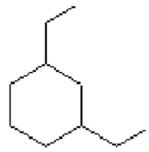

h) den zweiwertigen Rest, der sich von 4,4'-Methylendicyclohexyldiisocyanat (H12MDI) ableitet:

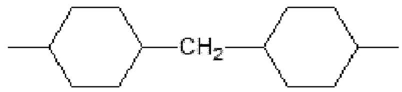

**3.** Polyurethan nach Anspruch 1 oder 2 mit der folgenden Formel (III):

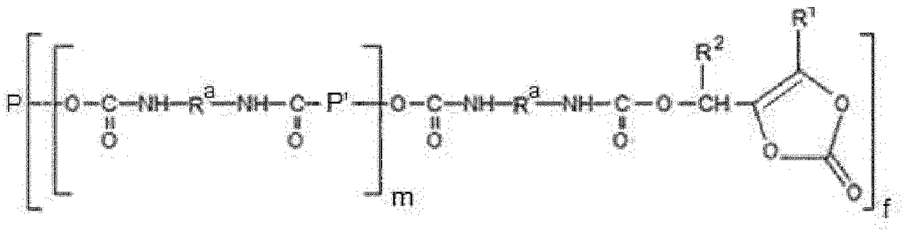

(III)

in der:

■ $R^1$ und $R^2$ wie in Anspruch 1 definiert sind, wobei $R^1$ vorzugsweise ein Methyl ist und $R^2$ vorzugsweise ein Wasserstoffatom ist;

■ P für eine der beiden nachstehenden Formeln steht:

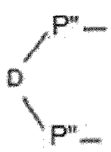

oder

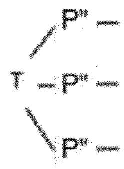

in denen D und T unabhängig voneinander für einen linearen oder verzweigten, cyclischen, alicyclischen oder aromatischen, gesättigten oder ungesättigten Kohlenwasserstoffrest mit 2 bis 66 Kohlenstoffatomen und gegebenenfalls einem oder mehreren Heteroatomen stehen;

■ wobei P' und P" unabhängig voneinander für einen zweiwertigen Rest stehen, der aus einem Polyol stammt, das vorzugsweise aus Polyetherpolyolen, Polycarbonatpolyolen, Polyesterpolyolen, Polydienpolyolen und Mischungen davon ausgewählt ist;

■ m und f derartige ganze Zahlen sind, dass die mittlere Molmasse des Polyurethans im Bereich von 600 bis 100.000 g/mol liegt;

■ f gleich 2 oder 3 ist;

■ $R^a$ für einen aus den Resten $R^3$ gemäß Anspruch 2 und der zweiwertigen Einheit der Formel (II) gemäß Anspruch 1 ausgewählten zweiwertigen Rest steht, wobei mindestens ein $R^a$ eine zweiwertige Einheit der Formel (II) ist.

**4.** Polyurethan nach einem der Ansprüche 1 bis 3, **dadurch gekennzeichnet, dass** es durch Umsetzung einer Verbindung (PP1) mit mindestens zwei NCO-Gruppen und mindestens einer zweiwertigen Einheit der Formel (II) gemäß Anspruch 1 mit mindestens einer Verbindung der folgenden Formel (IV):

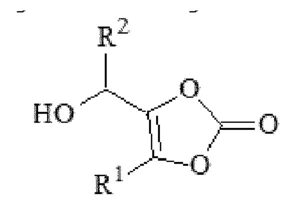

(IV)

in der in der $R^1$ und $R^2$ wie in Anspruch 1 definiert sind, wobei $R^1$ vorzugsweise ein Methyl ist und $R^2$ vorzugsweise ein Wasserstoffatom ist, erhältlich ist.

**5.** Verfahren zur Herstellung eines Polyurethans (PP2) gemäß einem der Ansprüche 1 bis 4, umfassend einen Schritt der Polyadditionsreaktion (mit der Bezeichnung E2):

- von mindestens einer Verbindung (PP1) mit mindestens zwei NCO-Gruppen und mindestens einer zweiwertigen Einheit der Formel (II):

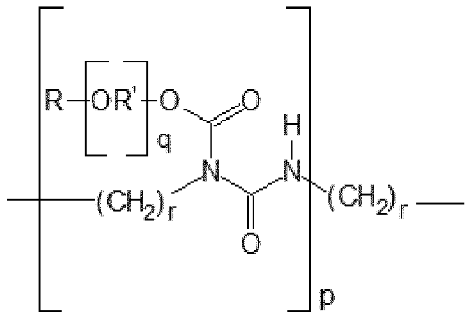

(II)

in der:

- p eine ganze Zahl im Bereich von 1 bis 2 ist;
- q eine ganze Zahl im Bereich von 0 bis 9 ist;
- r eine ganze Zahl mit einem Wert von 5 oder 6 ist;
- R für eine gesättigte oder ungesättigte, cyclische oder acyclische, lineare oder verzweigte Kohlenwasserstoffkette mit 1 bis 20 Kohlenstoffatomen steht; und
- R’ für eine lineare oder verzweigte, gesättigte zweiwertige Kohlenwasserstoffgruppe mit 2 bis 4 Kohlenstoffatomen steht;

- mit mindestens einer Verbindung der Formel (IV) gemäß Anspruch 4,
wobei die Mengen von Verbindung(en) (PP1) und von Verbindung (en) der Formel (IV) zu einem als $r_2$ bezeichneten NCO/OH-Molverhältnis kleiner oder gleich 1, vorzugsweise im Bereich von 0,8 bis 1 und bevorzugt von 0,85 bis 1,0, führen.

**6.** Verfahren nach Anspruch 5, wobei die Verbindung bzw. die Verbindungen (PP1) aus Allophanatderivaten von Hexamethylendiisocyanat (HDI) der folgenden Formel (IIA):

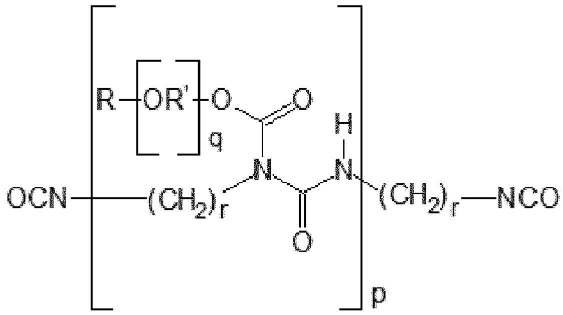

(IIA)

in der:

- p eine ganze Zahl im Bereich von 1 bis 2 ist;
- q eine ganze Zahl im Bereich von 0 bis 9 ist;
- r eine ganze Zahl mit einem Wert von 5 oder 6 ist;
- R für eine gesättigte oder ungesättigte, cyclische oder acyclische, lineare oder verzweigte Kohlenwasserstoffkette mit 1 bis 20 Kohlenstoffatomen steht; und
- R' für eine lineare oder verzweigte, gesättigte zweiwertige Kohlenwasserstoffgruppe mit 2 bis 4 Kohlenstoffatomen steht;

ausgewählt wird bzw. werden.

**7.** Verfahren nach Anspruch 5, wobei die Verbindung bzw. die Verbindungen (PP1) aus Polyurethanen mit NCO-Endgruppen, die durch eine Polyadditionsreaktion (mit der Bezeichnung E1):

(i) von einer Polyisocyanatzusammensetzung, insbesondere Diisocyanatzusammensetzung, die mindestens ein Allophanatderivat von Hexamethylendiisocyanat (HDI) der Formel (IIA) gemäß Anspruch 6 umfasst,
(ii) mit einer Polyolzusammensetzung, wobei das Polyol bzw. die Polyole vorzugsweise aus Polyetherpolyolen, Polyesterpolyolen, Polydienpolyolen, Polycarbonatpolyolen und Mischungen davon und bevorzugt aus Polyetherpolyolen ausgewählt ist bzw. sind,
wobei die Mengen von Polyisocyanat(en) und von Polyol(en) zu einem als $r_1$ bezeichneten NCO/OH-Molverhältnis streng größer als 1 und vorzugsweise im Bereich von 1,6 bis 1,9 führen,
erhältlich sind, ausgewählt wird bzw. werden.

**8.** Verfahren nach einem der Ansprüche 5 bis 7, **dadurch gekennzeichnet, dass** es keinen Schritt umfasst, der aus der Zugabe eines oder mehrerer Lösungsmittel und/oder eines oder mehrerer Weichmacher besteht.

**9.** Herstellungsverfahren nach Anspruch 7, **dadurch gekennzeichnet, dass** das Polyol bzw. die Polyole aus Polyoxyalkylenpolyolen mit linearem oder verzweigtem Alkylenteil mit 1 bis 4 Kohlenstoffatomen ausgewählt wird bzw. werden.

**10.** Mehrkomponentensystem, vorzugsweise ohne Lösungsmittel, umfassend:

- als erste Komponente (Komponente A) eine Zusammensetzung, die mindestens ein Polyurethan (PP2) gemäß einem der Ansprüche 1 bis 4 umfasst, und
- als zweite Komponente (Komponente B) eine Zusammensetzung, die mindestens eine Aminverbindung (B1) mit mindestens zwei Amingruppen, die aus primären Amingruppen, sekundären Amingruppen und Mischungen davon ausgewählt sind, vorzugsweise mit mindestens zwei primären Amingruppen, umfasst.

**11.** Mehrkomponentensystem nach Anspruch 10, **dadurch gekennzeichnet, dass** die Aminverbindung bzw. die Aminverbindungen (B1) mindestens zwei Methylenamingruppen ($-CH_2-NH_2$) umfasst bzw. umfassen.

**12.** Mehrkomponentensystem nach Anspruch 10 oder 11, **dadurch gekennzeichnet, dass** die Aminverbindung bzw. die Aminverbindungen (B1) aus Tris(2-aminoethyl)amin (TAEA), Hexamethylendiamin (HMDA), Polyethyleniminen, Dimerfettaminen und Mischungen davon ausgewählt ist bzw. sind.

**13.** Mehrkomponentensystem nach einem der Ansprüche 10 bis 12, **dadurch gekennzeichnet, dass** die Mengen von

Polyurethan(en) (PP2) und von Aminverbindung (en) (B1), die in dem Mehrkomponentensystem vorliegen, zu einem mit $r_3$ bezeichneten Molverhältnis der Zahl von Funktionen T der Formel (I) zur Zahl von primären und/oder sekundären Amingruppen im Bereich von 0,5 bis 1 führen.

**14.** Verfahren zum Verbinden von Materialien unter Verwendung des Polyurethans (PP2) gemäß einem der Ansprüche 1 bis 4, das folgende Schritte umfasst:

- Mischen von mindestens einem Polyurethan (PP2) gemäß einem der Ansprüche 1 bis 4 und mindestens einer Aminverbindung (B1) mit mindestens zwei Amingruppen, die aus primären Amingruppen, sekundären Amingruppen und Mischungen davon ausgewählt sind, vorzugsweise mit mindestens zwei primären Amingruppen;
- Beschichten der Oberfläche eines ersten Materials mit der Mischung, dann
- Auflaminieren der Oberfläche eines zweiten Materials auf die beschichtete Oberfläche, dann
- Vernetzen der Mischung.

**15.** Verwendung eines Polyurethans mit mindestens zwei endständigen Funktionen T der Formel (I) (PP2) gemäß einem der Ansprüche 1 bis 4 zur Herstellung einer Klebstoffzusammensetzung.

## Claims

**1.** Polyurethane (PP2) comprising:

- at least two, preferably two or three, T end functions of formula (I) below:

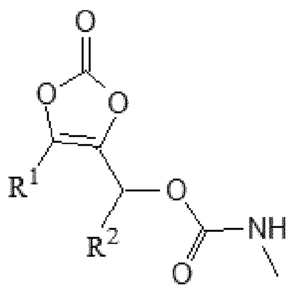

(I)

in which $R^1$ and $R^2$, which are identical or different, each represent a hydrogen atom, a linear or branched alkyl group, preferably a C1-C6 alkyl group, a cycloalkyl group, preferably a C5-C6 cycloalkyl group, a phenyl group, preferably a C6-C12 phenyl group, or an alkylphenyl group with a linear or branched alkyl chain, preferably a C1-C4 alkyl chain; or $R^1$ and $R^2$ may be bonded together to form a $-(CH_2)_n-$ group with n = 3, 4 or 5, and
- at least one divalent unit of formula (II) below:

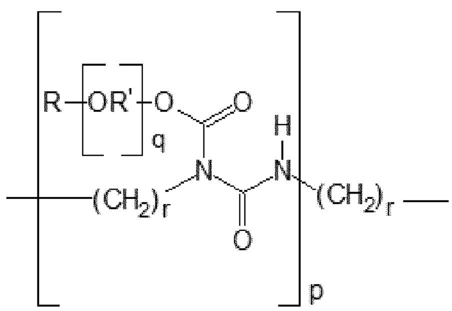

(II)

in which:

- p is an integer ranging from 1 to 2;
- q is an integer ranging from 0 to 9;

- r is an integer equal to 5 or 6;
- R represents a saturated or unsaturated, cyclic or acyclic, linear or branched hydrocarbon chain comprising from 1 to 20 carbon atoms; and
- R' represents a linear or branched, saturated, divalent hydrocarbon group having from 2 to 4 carbon atoms.

**2.** Polyurethane according to Claim 1, further comprising at least one of the following divalent radicals $R^3$:

a) the - $(CH_2)_5$- divalent radical derived from pentamethylene diisocyanate (PDI);
b) the - $(CH_2)_6$- divalent radical derived from hexamethylene diisocyanate (HDI);
c) the divalent radical derived from isophorone:

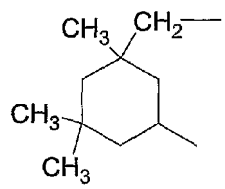

d) the divalent radical derived from TDI;
e) the divalent radical derived from MDI;
f) the divalent radical derived from xylylene diisocyanate (XDI);
g) the divalent radical derived from 1,3-bis(isocyanatomethyl)cyclohexane (m-H6XDI):

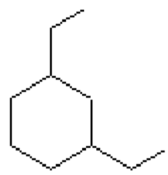

h) the divalent radical derived from 4,4'-methylene dicyclohexyl diisocyanate (H12MDI):

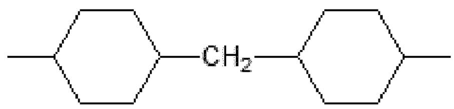

**3.** Polyurethane according to either one of Claims 1 and 2, having the following formula (III):

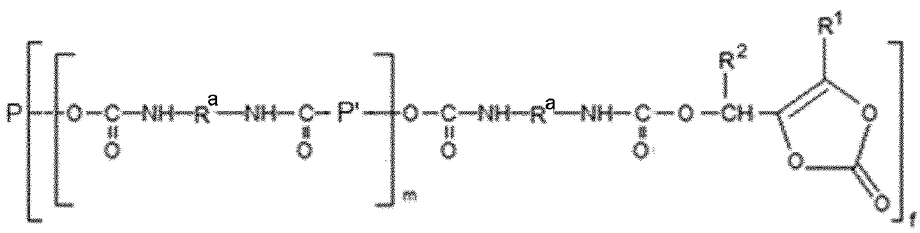

(III)

in which:

- $R^1$ and $R^2$ are as defined in Claim 1, $R^1$ preferably being a methyl and $R^2$ preferably being a hydrogen atom;
- P represents one of the two formulae below:

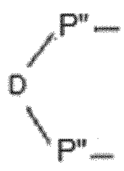

or

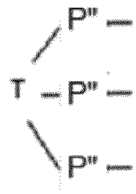

in which D and T represent, independently of one another, a linear or branched, cyclic, alicyclic or aromatic, saturated or unsaturated hydrocarbon radical comprising from 2 to 66 carbon atoms, optionally comprising one or more heteroatoms;

- P' and P" being, independently of one another, a divalent radical derived from a polyol preferably selected from polyether polyols, polycarbonate polyols, polyester polyols, polydiene polyols, and mixtures thereof;
- m and f are integers such that the average molecular mass of the polyurethane ranges from 600 to 100 000 g/mol;
- f is equal to 2 or 3;
- $R^a$ represents a divalent radical selected from the $R^3$ radicals as defined in Claim 2, and the divalent unit of formula (II) as defined in Claim 1, at least one $R^a$ being a divalent unit of formula (II).

**4.** Polyurethane according to any one of Claims 1 to 3, **characterized in that** it can be obtained by reaction of a compound (PP1) comprising at least two NCO groups and at least one divalent unit of formula (II) as defined in Claim 1, with at least one compound of formula (IV) below:

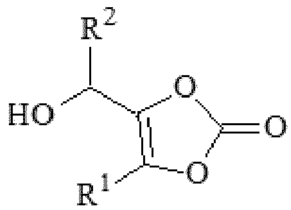

(IV)

in which in which $R^1$ and $R^2$ are as defined in Claim 1, preferably $R^1$ is a methyl and $R^2$ is a hydrogen.

**5.** Process for preparing a polyurethane (PP2) as defined according to any one of Claims 1 to 4, comprising a step of polyaddition reaction (denoted E2):

- of at least one compound (PP1) having at least two NCO groups and at least one divalent unit of formula (II) :

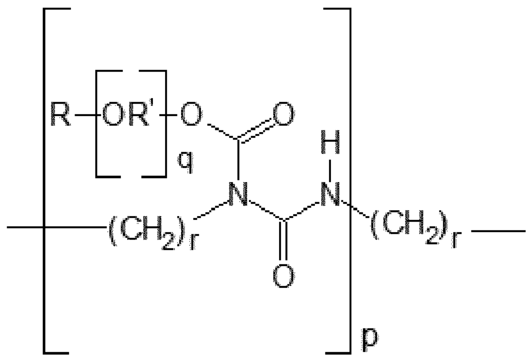

(II)

in which:

- p is an integer ranging from 1 to 2;

- q is an integer ranging from 0 to 9;
- r is an integer equal to 5 or 6;
- R represents a saturated or unsaturated, cyclic or acyclic, linear or branched hydrocarbon chain comprising from 1 to 20 carbon atoms;
- R’ represents a linear or branched, saturated, divalent hydrocarbon group having from 2 to 4 carbon atoms;

- with at least one compound of formula (IV) as defined in Claim 4,
in amounts of compound (s) (PP1) and of compound (s) of formula (IV) resulting in an NCO/OH molar ratio, denoted $r_2$, of less than or equal to 1, preferably ranging from 0.8 to 1 and preferentially from 0.85 to 1.0.

**6.** Process according to Claim 5, in which the compound(s) (PP1) is (are) selected from hexamethylene diisocyanate (HDI) allophanate derivatives of formula (IIA) below:

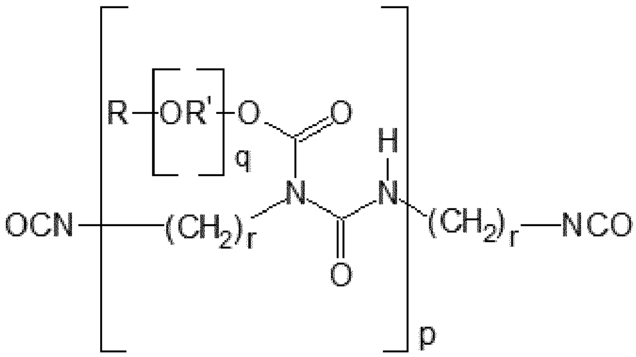

(IIA)

in which:

- p is an integer ranging from 1 to 2;
- q is an integer ranging from 0 to 9;
- r is an integer equal to 5 or 6;
- R represents a saturated or unsaturated, cyclic or acyclic, linear or branched hydrocarbon chain comprising from 1 to 20 carbon atoms;
- R’ represents a linear or branched, saturated, divalent hydrocarbon group having from 2 to 4 carbon atoms.

**7.** Process according to Claim 5, in which the compound(s) (PP1) is (are) selected from polyurethanes having NCO end groups capable of being obtained by a polyaddition reaction (denoted step E1):

(i) of a polyisocyanate(s) composition, and in particular diisocyanates composition, comprising at least one hexamethylene diisocyanate (HDI) allophanate derivative of formula (IIA) as defined in Claim 6, and
(ii) with a polyol(s) composition, said polyol (s) being preferably selected from polyether polyols, polyester polyols, polydiene polyols, polycarbonate polyols, and mixtures thereof, and preferentially from polyether polyols, in amounts of polyisocyanate(s) and of polyol(s) resulting in an NCO/OH molar ratio, denoted r1, of strictly greater than 1, and preferably ranging from 1.6 to 1.9.

**8.** Process according to any one of Claims 5 to 7, **characterized in that** it does not comprise a step consisting in adding one or more solvent(s) and/or plasticizer(s) .

**9.** Preparation process according to Claim 7, **characterized in that** the polyol(s) is (are) selected from polyoxyalkylene polyols, the linear or branched alkylene portion of which comprises from 1 to 4 carbon atoms.

**10.** Multicomponent, preferably solvent-free, system comprising:

- as first component (component A), a composition comprising at least one polyurethane (PP2) as defined in any one of Claims 1 to 4, and
- as second component (component B), a composition comprising at least one amino compound (B1) comprising at least two amine groups selected from primary amine groups, secondary amine groups and mixtures thereof,

preferably comprising at least two primary amine groups.

**11.** Multicomponent system according to Claim 10, **characterized in that** the amino compound(s) (B1) comprise at least two methylene amine groups ($-CH_2-NH_2$).

**12.** Multicomponent system according to either one of Claims 10 and 11, **characterized in that** the amino compound(s) (B1) are selected from tris(2-aminoethyl)amine (TAEA), hexamethylenediamine (HMDA), polyethyleneimines, dimer fatty amines, and mixtures thereof.

**13.** Multicomponent system according to any one of Claims 10 to 12, **characterized in that** the amounts of polyurethane(s) (PP2) and of amino compound(s) (B1) present in the multicomponent system result in a molar ratio of the number of T functions of formula (I) to the number of primary and/or secondary amine groups, denoted $r_3$, ranging from 0.5 to 1.

**14.** Process for assembling materials employing the polyurethane (PP2) as defined in any one of Claims 1 to 4, comprising the following steps:

- the mixing of at least one polyurethane (PP2) as defined in any one of Claims 1 to 4, and of at least one amino compound (B1) comprising at least two amine groups selected from primary amine groups, secondary amine groups and mixtures thereof, preferably comprising at least two primary amine groups;
- the coating of said mixture on the surface of a first material, then
- the laminating of the surface of a second material on said coated surface, then
- the crosslinking of said mixture.

**15.** Use of a polyurethane comprising at least two T end functions of formula (I) (PP2) as defined according to any one of Claims 1 to 4, for the manufacture of an adhesive composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015140457 A
- EP 0078413 A
- US 3020290 A
- WO 9602253 A


### Littérature non-brevet citée dans la description


- *Liebigs Annalen der Chemie,* 1972, vol. 764, 116-124
- *Tetrahedron Letters,* 1972, 1701-1704
- *CHEMICAL ABSTRACTS,* 91526-18-0